(19) Europäisches Patentamt
European Patent Office
Office européen des brevets

(11) **EP 4 693 886 A1**

(12) **EUROPEAN PATENT APPLICATION**
published in accordance with Art. 153(4) EPC

(43) Date of publication:
**11.02.2026   Bulletin 2026/07**

(21) Application number: 24780921.3

(22) Date of filing: **29.03.2024**

(51) International Patent Classification (IPC):
*H02P 23/14* (2006.01)          *F04B 49/02* (2006.01)
*F04B 49/06* (2006.01)          *F04B 49/10* (2006.01)
*F04B 51/00* (2006.01)

(52) Cooperative Patent Classification (CPC):
**F04B 49/02; F04B 49/06; F04B 49/10; F04B 51/00;
F04C 28/00; H02P 23/14**

(86) International application number:
**PCT/JP2024/013351**

(87) International publication number:
**WO 2024/204828 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023   JP 2023059372**

(71) Applicant: **Daikin Industries, Ltd.
Osaka-shi, Osaka 530-0001 (JP)**

(72) Inventors:
• **DOI, Akihiro
  Osaka-shi, Osaka 530-0001 (JP)**
• **ARAKI, Takeshi
  Osaka-shi, Osaka 530-0001 (JP)**
• **OGAWA, Takuro
  Osaka-shi, Osaka 530-0001 (JP)**

(74) Representative: **Hoffmann Eitle
Patent- und Rechtsanwälte PartmbB
Arabellastraße 30
81925 München (DE)**

(54) **CONTROL DEVICE, REFRIGERATION SYSTEM, CONTROL METHOD, AND CONTROL PROGRAM**

(57)      In a system including a compressor (50) including a motor (60) and a compression mechanism (65), a control unit (31) performs handling processing including at least one of output processing for outputting information indicating that the compressor (50) is in a predetermined state and changing processing for changing an operating condition of the system in a case where an index value indicative of a magnitude of a temporal change of a specific frequency component included in a physical amount correlated with a state of the compressor (50) and a predetermined threshold value satisfy a predetermined relationship.

FIG.1

EP 4 693 886 A1

**Description**

Technical Field

The present disclosure relates to a control technique.

Background Art

Patent Literature 1 discloses a malfunction sign detection device for an air conditioner including a compressor that includes a motor and a drive device that outputs a three-phase current to the motor. This malfunction sign detection device includes a conversion unit and an abnormality detection unit. The conversion unit calculates a q-axis current of the motor from a measurement value of the three-phase current and a rotation angle of a rotor of the motor. The abnormality detection unit detects an abnormality of the compressor by comparing an evaluation value calculated by performing frequency analysis on the q-axis current with a reference value.

Citation List

Patent Literature

PTL 1: Japanese Patent No. 6173530

Summary of Invention

Technical Problem

States of a compressor including a motor and a compression mechanism include a state in which a specific frequency component included in a physical amount correlated with a state of the compressor rapidly changes. However, just by comparing a magnitude of the specific frequency component with a threshold value as in Patent Literature 1, it is sometimes difficult to appropriately perform processing for handling a case where the compressor is in a predetermined state (a state in which a specific frequency component included in a physical amount rapidly changes).

Solution to Problem

A first aspect of the present disclosure relates to a control device for controlling a system including a compressor (50) including a motor (60) and a compression mechanism (65), and the control device includes a control unit (31) configured to perform handling processing including at least one of output processing for outputting information indicating that the compressor (50) is in a predetermined state and changing processing for changing an operating condition of the system in a case where an index value indicative of a magnitude of a temporal change of a specific frequency component included in a physical amount correlated with a state of the compressor (50) and a predetermined threshold value satisfy a predetermined relationship.

As a result of diligent studies, the inventors of the present application found that the states of the compressor (50) including the motor (60) and the compression mechanism (65) include a "state in which the specific frequency component included in the physical amount correlated with the state of the compressor (50) rapidly changes". Furthermore, the inventors of the present application found that such a state (the state of the compressor (50) in which the specific frequency component rapidly changes) can be estimated on the basis of the magnitude of the temporal change of the specific frequency component included in the physical amount.

According to the first aspect, it is possible to appropriately perform processing for handling a case where the compressor (50) is in the predetermined state (the state in which the specific frequency component rapidly changes) by performing the handling processing in a case where the index value indicative of the magnitude of the temporal change of the specific frequency component included in the physical amount correlated with the state of the compressor (50) and the predetermined threshold value satisfy the predetermined relationship.

In a second aspect of the present disclosure, the control device according to the first aspect is configured such that the control unit (31) is configured to perform the handling processing in a case where the index value is larger than the threshold value under conditions that an amplitude value of the specific frequency component included in the physical amount obtained during 10 seconds is derived every second, the index value is an absolute value of a difference between a value obtained by dividing a first moving average value (MA1) by a second moving average value (MA2) and 1, the first moving average value (MA1) is an average value of 10 amplitude values derived within a first period (T1) lasting 10 seconds that ends at a time (ti) at which a latest amplitude value is derived, the second moving average value (MA2) is an

average value of 180 amplitude values derived within a second period (T2) lasting 3 minutes that ends at a time (ti) at which a latest amplitude value is derived, and the threshold value is set to a value equal to or greater than 1.1 times a maximum value of the index value obtained during a measurement period lasting 10 minutes under a condition that the compressor (50) is in a predetermined steady state.

As a result of diligent studies, the inventors of the present application found that it is possible to estimate that the compressor (50) is in the predetermined state (the state in which the specific frequency component rapidly changes) in a case where the index value is larger than the threshold value by setting the threshold value for the index value to a "value equal to or greater than 1.1 times the maximum value of the index value obtained during the measurement period lasting 10 minutes under the condition that the compressor (50) is in a predetermined steady state".

According to the second aspect, processing for handling a case where the compressor (50) is in the predetermined state (the state in which the specific frequency component rapidly changes) can be appropriately performed by performing the handling processing in a case where the index value is larger than the threshold value.

In a third aspect of the present disclosure, the control device according to the first aspect is configured such that the control unit (31) is configured to perform the handling processing in a case where the index value is larger than the threshold value under conditions that an amplitude value of the specific frequency component included in the physical amount obtained during 10 seconds is derived every second, the index value is an absolute value of a difference between a value obtained by dividing a first moving average value (MA1) by a second moving average value (MA2) and 1, the first moving average value (MA1) is an average value of 10 amplitude values derived within a first period (T1) lasting 10 seconds that ends at a time (ti) at which a latest amplitude value is derived, the second moving average value (MA2) is an average value of 180 amplitude values derived within a second period (T2) lasting 3 minutes that ends at a time (ti) at which a latest amplitude value is derived, and the threshold value is set to 0.1.

As a result of diligent studies, the inventors of the present application found that it is possible "to estimate that the compressor (50) is in the predetermined state (the state in which the specific frequency component rapidly changes) in a case where the index value is larger than the threshold value by setting the threshold value for the index value to "0.1".

According to the third aspect, processing for handling a case where the compressor (50) is in the predetermined state (the state in which the specific frequency component rapidly changes) can be appropriately performed by performing the handling processing in a case where the index value is larger than the threshold value.

In a fourth aspect of the present disclosure, the control device according to any one of the first to third aspects is configured such that the compression mechanism (65) includes a compression chamber (68) for compressing a working fluid, the compression chamber (68) is sealed by a lubricating oil, and the predetermined state is a state in which sealability of the compression chamber (68) provided by the lubricating oil has failed.

As a result of diligent studies, the inventors of the present application found a phenomenon "when the sealability of the compression chamber (68) provided by the lubricating oil fails in the compressor (50), the specific frequency component included in the physical amount correlated with the state of the compressor (50) rapidly changes".

According to the fourth aspect, processing for handling a case where the compressor (50) is in the "state in which the sealability of the compression chamber (68) provided by the lubricating oil has failed" can be appropriately performed.

In a fifth aspect of the present disclosure, the control device according to any one of the first to third aspects is configured such that the compression mechanism (65) includes a compression chamber (68) for compressing a working fluid, the compressor (50) includes an oil accumulation portion (54) in which a lubricating oil is accumulated and an oil supply path

(100) for supplying the lubricating oil accumulated in the oil accumulation portion (54) to the compression chamber (68), the oil supply path (100) has a suction port (101a), and in a case where the suction port (101a) is immersed in the lubricating oil accumulated in the oil accumulation portion (54), the lubricating oil drawn in through the suction port (101a) is enabled to be supplied to the compression chamber (68), the compression chamber (68) is sealed by the lubricating oil, and the predetermined state is a state in which the suction port (101a) of the oil supply path (100) is not immersed in the lubricating oil accumulated in the oil accumulation portion (54).

As a result of diligent studies, the inventors of the present application found a phenomenon "when the suction port (101a) of the oil supply path (100) is no longer immersed in the lubricating oil accumulated in the oil accumulation portion (54) in the compressor (50), the sealability of the compression chamber (68) provided by the lubricating oil fails, and as a result, the specific frequency component included in the physical amount correlated with the state of the compressor (50) rapidly changes".

According to the fifth aspect, processing for handling a case where the compressor (50) is in the "state in which the suction port (101a) of the oil supply path (100) is not immersed in the lubricating oil accumulated in the oil accumulation portion (54)" can be appropriately performed.

In a sixth aspect of the present disclosure, the control device according to any one of the first to third aspects is configured such that the predetermined state is a liquid compression state in which a liquid-form working fluid is drawn into the compression mechanism (65) and is compressed in the compression mechanism (65).

As a result of diligent studies, the inventors of the present application found a phenomenon "when a liquid-form working fluid is drawn into the compression mechanism (65) and is compressed in the compression mechanism (65) in the compressor (50), the specific frequency component included in the physical amount correlated with the state of the compressor (50) rapidly changes".

According to the sixth aspect, processing for handling a case where the compressor (50) is in a "liquid compression state in which a liquid-form working fluid is drawn into the compression mechanism (65) and is compressed in the compression mechanism (65)" can be appropriately performed.

In a seventh aspect of the present disclosure, the control device according to any one of the first to sixth aspects is configured such that the physical amount is any of a rotation frequency of the motor (60), a voltage applied to the motor (60), a current flowing through the motor (60), vibration of the compressor (50), a sound of the compressor (50), and ambient sound around the compressor (50).

In an eighth aspect of the present disclosure, the control device according to any one of the first to seventh aspects is configured such that a frequency of the specific frequency component is a frequency that is in synchronization with a rotation frequency of the motor (60).

A ninth aspect of the present disclosure relates to a refrigeration system, and the refrigeration system includes a refrigerant circuit (RR1) including a compressor (50) including a motor (60) and a compression mechanism (65); and a control device (30), and the control device (30) is the control device according to any one of the first to eighth aspects.

A tenth aspect of the present disclosure relates to a control method for controlling a system including a compressor (50) including a motor (60) and a compression mechanism (65), and the control method includes an acquisition step of acquiring a physical amount correlated with a state of the compressor (50); and a handling step including at least one of an output step of outputting information indicating that the compressor (50) is in a predetermined state and a changing step of changing an operating condition of the system in a case where an index value indicative of a magnitude of a temporal change of a specific frequency component included in the physical amount acquired in the acquisition step and a predetermined threshold value satisfy a predetermined relationship.

According to the tenth aspect, it is possible to appropriately perform processing for handling a case where the compressor (50) is in the predetermined state (the state in which the specific frequency component rapidly changes) by performing the handling processing in a case where the index value indicative of the magnitude of the temporal change of the specific frequency component included in the physical amount correlated with the state of the compressor (50) and the predetermined threshold value satisfy the predetermined relationship.

An eleventh aspect of the present disclosure relates to a control program for causing a computer to perform the control method according to the tenth aspect.

Brief Description of Drawings

[Fig. 1] Fig. 1 is a block diagram illustrating a configuration of a drive system according to an embodiment.
[Fig. 2] Fig. 2 is a longitudinal sectional view illustrating an internal configuration of a compressor.
[Fig. 3] Fig. 3 is a graph illustrating a relationship between an oil level and a specific frequency component.
[Fig. 4] Fig. 4 is a graph illustrating a temporal change of the specific frequency component before and after occurrence of an abnormality of an oil level.
[Fig. 5] Fig. 5 is a graph illustrating a temporal change of the specific frequency component under a normal oil level condition and a temporal change of the specific frequency component during occurrence of failure of sealability of a compression chamber provided by a lubricating oil.
[Fig. 6] Fig. 6 is a graph illustrating a temporal change of the specific frequency component during liquid compression.
[Fig. 7] Fig. 7 is a graph illustrating a temporal change of the specific frequency component during a normal operation and a temporal change of the specific frequency component during occurrence of liquid compression.
[Fig. 8] Fig. 8 is a flowchart illustrating estimation processing performed by a control unit.
[Fig. 9] Fig. 9 is a graph for explaining first estimation processing.
[Fig. 10] Fig. 10 is a graph for explaining second estimation processing.
[Fig. 11] Fig. 11 is a graph for explaining third estimation processing.
[Fig. 12] Fig. 12 is a graph illustrating a first moving average value and a second moving average value.
[Fig. 13] Fig. 13 is a graph for explaining fourth estimation processing.
[Fig. 14] Fig. 14 is a piping system diagram illustrating a configuration of a refrigeration system.
[Fig. 15] Fig. 15 is a graph for explaining derivation of an amplitude value of the specific frequency component.
[Fig. 16] Fig. 16 is a graph illustrating fluctuation of an index value depending on a state of the compressor.
[Fig. 17] Fig. 17 is a graph illustrating a temporal change of torque in a two-cylinder compressor.

Description of Embodiments

An embodiment is described below with reference to the drawings. Note that identical or corresponding parts in the drawings are given identical reference signs, and repeated description thereof is omitted.

(Embodiment)

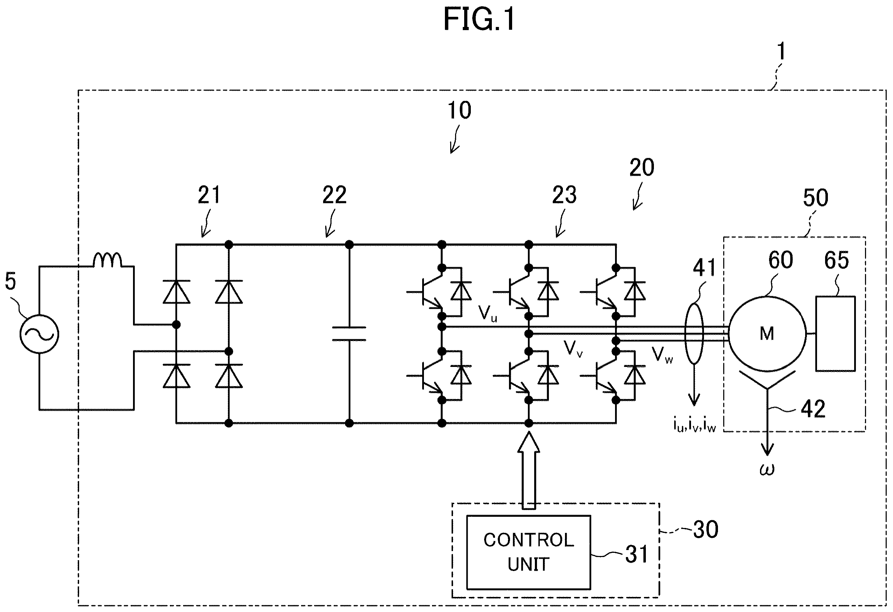

Fig. 1 illustrates a configuration of a drive system (10) according to the embodiment. The drive system (10) drives a motor (60) by using electric power supplied from a power source (5). The motor (60) is mounted in a compressor (50). The compressor (50) includes a compression mechanism (65) in addition to the motor (60). The compression mechanism (65) is driven by the motor (60), and draws in a working fluid, compresses the working fluid, and discharges the compressed working fluid. The working fluid is, for example, a refrigerant.
In this example, the power source (5) is a three-phase alternating current power source, and the motor (60) is a three-phase alternating current motor. For example, the motor (60) is an interior permanent magnet motor (IPM motor). The drive system (10) is provided in an apparatus (1). The apparatus (1) is, for example, an outdoor unit of an air conditioner. The drive system (10) includes a motor drive device (20) and a control device (30).

[Motor Drive Device]

The motor drive device (20) drives the motor (60). Specifically, the motor drive device (20) converts electric power supplied from the power source (5) into output alternating-current electric power (in this example, three-phase alternating current electric power) having predetermined frequency and voltage, and supplies the output alternating-current electric power to the motor (60). In this example, the motor drive device (20) includes a converter (21), a direct-current part (22), and an inverter (23).
The converter (21) rectifies the electric power supplied from the power source (5). In this example, the converter (21) full-wave rectifies the alternating-current electric power supplied from the power source (5). For example, the converter (21) includes a diode bridge circuit in which a plurality of rectifying diodes are connected in a bridge manner.
The direct-current part (22) generates direct-current electric power according to the power source electric power supplied from the power source (5). In this example, the direct-current part (22) includes a capacitor and smooths the output of the converter (21).
The inverter (23) includes a plurality of switching elements, and converts the output of the direct-current part (22) into output alternating-current electric power (three-phase alternating current electric power) having predetermined frequency and voltage by a switching operation of the plurality of switching elements. The inverter (23) is an example of a conversion unit that converts the direct-current electric power generated by the direct-current part (22) into alternating-current electric power by a switching operation.
In this example, the inverter (23) includes six switching elements that are bridge-connected and six freewheeling diodes connected in reverse parallel to the respective six switching elements. Specifically, the inverter (23) includes three switching legs each including two switching elements connected in series. Mid points of the three switching legs (specifically, connection points between upper-arm-side switching elements and lower-arm-side switching elements) are connected to respective three windings (U-phase, V-phase, and W-phase windings) of the motor (60).

[Various Sensors]

The motor drive device (20) is provided with various sensors such as a phase current detection unit (41) and an electrical angular frequency detection unit (42). Various kinds of information detected by the various sensors are transmitted to the control device (30). Specifically, detection signals of the various sensors are transmitted to a control unit (31), which will be described later. The various sensors are an example of a detection unit that detects information for obtaining a physical amount correlated with a state of the compressor (50). Furthermore, the drive system (10) and a refrigeration system (RR), which will be described later, are also provided with various sensors for acquiring various physical amounts.
The phase current detection unit (41) detects three phase currents (a U-phase current (iu), a V-phase current (iv), and a W-phase current (iw)) that flow through the three windings (not illustrated) of the motor (60). For example, the phase current detection unit (41) may detect all of the three phase currents (iu, iv, and iw) or may detect two of the three phase currents (iu, iv, and iw) and derive a remaining one phase current on the basis of the detected two phase currents. The phase current detection unit (41) may derive the three phase currents (iu, iv, and iw) on the basis of a DC current detected by a shunt resistor (not illustrated) provided in the direct-current part (22) and a switching pattern.
The electrical angular frequency detection unit (42) detects an electrical angular frequency ($\omega$) of the motor (60). Note that the electrical angular frequency detection unit (42) is not an essential element, and the electrical angular frequency (ω) of the motor (60) may be calculated by another method or may be estimated in a sensorless manner.

[Control Device (State Estimation Device)]

The control device (30) estimates a state of the compressor (50). The control device (30) is an example of a state estimation device that estimates the state of the compressor (50). Processing (processing related to estimation of the state of the compressor (50)) in the control device (30) is an example of a state estimation method for estimating the state of the compressor (50). Processing (processing related to control of a system including the compressor (50)) in the control device (30) is an example of a control method for controlling the system including the compressor (50).

In this example, the control device (30) estimates the state of the compressor (50) and performs processing based on the estimated state of the compressor (50). Furthermore, the control device (30) controls the motor (60). Specifically, the control device (30) controls the motor (60) by controlling the motor drive device (20).

[Control Unit]

The control device (30) includes the control unit (31). The control unit (31) performs various kinds of processing. Specifically, the control unit (31) acquires information and data from each unit of the apparatus (1) and performs various kinds of processing on the basis of the information and data. The processing performed by the control unit (31) will be described later in detail.

For example, the control unit (31) includes a processor and a memory that is electrically connected to the processor and in which a program for causing the processor to operate is stored. The processor executes the program, and thereby various functions of the control unit (31) are realized. Note that the control unit (31) is an example of a computer, and the program is an example of a state estimation program and is also an example of a control program.

[Processing Performed by Control Unit]

In this example, the control unit (31) performs estimation processing, control processing, and handling processing.

[Estimation Processing]

In the estimation processing, the control unit (31) estimates the state of the compressor (50). Specifically, the control unit (31) estimates the state of the compressor (50) on the basis of a magnitude of a temporal change of a specific frequency component included in a physical amount correlated with a state of the compressor (50). For example, the magnitude of the temporal change of the specific frequency component is indicated by a change amount of the specific frequency component per unit time. In the estimation processing, it is estimated whether or not the compressor (50) is in a "state in which the specific frequency component rapidly changes (specifically, rapidly rises or rapidly falls)". The estimation processing will be described in detail later.

[Control Processing]

In the control processing, the control unit (31) controls the motor (60) by controlling the motor drive device (20). Specifically, the control unit (31) receives a target command value such as a command value of the electrical angular frequency (ω) of the motor (60), detection signals of the various sensors provided in the motor drive device (20), and the like. The control unit (31) controls the alternating-current electric power supplied from the inverter (23) to the motor (60) by controlling the switching operation of the inverter (23) on the basis of the target command value, the detection signals of the various sensors, and the like.

[Handling Processing]

In this example, the control unit (31) performs the handling processing in a case where the control unit (31) estimates in the estimation processing that the compressor (50) is in the "state in which the specific frequency component rapidly changes". The handling processing is processing for handling the "state in which the specific frequency component rapidly changes" of the compressor (50), and includes at least one of output processing for outputting first information indicating that the compressor (50) is in the "state in which the specific frequency component rapidly changes" and changing processing for changing a drive condition of the motor (60).

Examples of the output processing include first output processing, second output processing, and third output processing described below and combinations thereof. The first output processing is processing for displaying the first information on a display device (not illustrated) provided on a remote controller by outputting the first information to the display device. The second output processing is processing for causing a control unit (not illustrated) that controls the operation of the apparatus (1) to perform an operation for handling an abnormal state by outputting the first information to the control unit. The third output processing is processing for uploading the first information to a data accumulation unit (not illustrated) on the cloud.

Examples of the changing processing include first changing processing, second changing processing, and third changing processing described below and combinations thereof. The first changing processing is processing for stopping the motor (60). The second changing processing is processing for accelerating the motor (60). The third changing processing is processing for decelerating the motor (60).

[Details of Compressor]

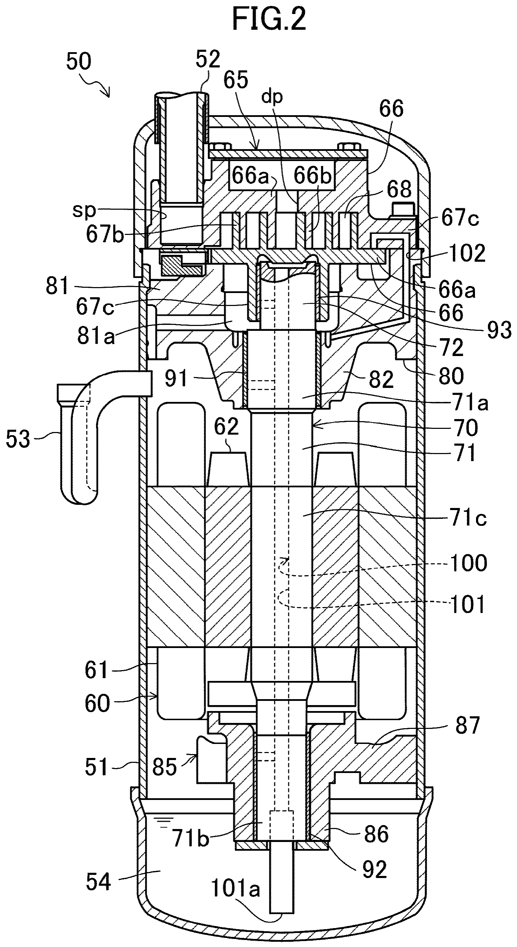

As illustrated in Fig. 2, the compressor (50) is a hermetic scroll compressor. The compressor (50) includes a casing (51), the motor (60), the compression mechanism (65), a first support portion (80), and a second support portion (85). The motor (60), the compression mechanism (65), the first support portion (80), and the second support portion (85) are stored in the casing (51).

<Casing>

The casing (51) is a hermetically sealed cylindrical container having closed ends, and has an axis extending in the up-down direction. In an inner space of the casing (51), the compression mechanism (65), the first support portion (80), the motor (60), and the second support portion (85) are provided in this order from top to bottom. An oil accumulation portion (54) in which a lubricating oil (refrigerant oil) is accumulated is provided in a bottom portion of the casing (51).

The casing (51) includes an intake pipe (52) and a discharge pipe (53). The intake pipe (52) passes through a top portion of the casing (51) and is connected to the compression mechanism (65), and guides a low-pressure working fluid from an outside of the compressor (50) to the compression mechanism (65). The discharge pipe (53) passes through a trunk portion of the casing (51) and is opened to the inner space (a space below the second support portion (85)) of the casing (51). The discharge pipe (53) guides, to the outside of the compressor (50), a high-pressure working fluid that has been discharged from a compression chamber (68) and guided to the space below the second support portion (85) of the casing (51). According to such a configuration, the pressure of the high-pressure working fluid discharged from the compression chamber (68) acts on the space (including the oil accumulation portion (54)) below the second support portion (85) of the casing (51).

<Motor>

The motor (60) includes a stator (61) and a rotor (62). The stator (61) is fixed to the trunk portion of the casing (51). The rotor (62) is located inside the stator (61). A drive shaft (70) extends through the rotor (62).

<First Support Unit>

The first support portion (80) includes a body portion (81) and a first bearing portion (82). The body portion (81) has a thick circular plate shape and is fixed to the casing (51). A crank chamber (81a) is provided in a central portion of the body portion (81). The crank chamber (81a) is a columnar recess that is opened on a front face (an upper face in Fig. 2) of the body portion (81). The first bearing portion (82) has a cylindrical shape that protrudes from a back face (a lower face in Fig. 2) of the body portion (81) and is provided on a central portion of the body portion (81). The first bearing portion (82) has a through-hole through which the drive shaft (70) extends. A first bearing (91), which will be described later, is embedded in this through-hole.

<Second Support Unit>

The second support portion (85) includes a second bearing portion (86) and three leg portions (87). The second bearing portion (86) has a thick cylindrical shape. A second bearing (92), which will be described later, is embedded in the second bearing portion (86). The leg portions (87) radially extend from the second bearing portion (86). Ends of the leg portions (87) of the second support portion (85) are fixed to the trunk portion of the casing (51).

<Compression Mechanism>

The compression mechanism (65) is a scroll fluid machine. The compression mechanism (65) includes a fixed scroll (66) and an orbiting scroll (67). A wrap of the fixed scroll (66) meshes with a wrap of the orbiting scroll (67), and thus the fixed scroll (66) and the orbiting scroll (67) form the compression chamber (68).

The fixed scroll (66) includes a fixed end plate (66a), a fixed wrap (66b), and a peripheral wall portion (66c). The fixed end plate (66a) is a relatively thick flat-plate-shaped portion located in an upper portion of the fixed scroll (66). The fixed wrap (66b) has a spiral wall shape and protrudes from a front face (a lower face in Fig. 2) of the fixed end plate (66a). The peripheral wall portion (66c) surrounds an outer peripheral side of the fixed wrap (66b) and protrudes from the front face (the lower face in Fig. 2) of the fixed end plate (66a). The peripheral wall portion (66c) is fixed to the first support portion (80) fixed to the casing (51). The peripheral wall portion (66c) has an intake port (sp) through which the intake pipe (52) is inserted. The fixed end plate (66a) has a discharge port (dp).

The orbiting scroll (67) includes an orbiting end plate (67a), an orbiting wrap (67b), and a boss portion (67c). The orbiting end plate (67a) has an approximately circular flat plate shape. The orbiting wrap (67b) has a spiral wall shape and protrudes from a front face (an upper face in Fig. 2) of the orbiting end plate (67a). The boss portion (67c) has a cylindrical shape that protrudes from a back face (a lower face in Fig. 2) of the orbiting end plate (67a) and is provided on a central portion of the orbiting end plate (67a). A third bearing (93), which will be described later, is embedded in the boss portion (67c).

<Drive Shaft>

The drive shaft (70) includes a main shaft portion (71) and an eccentric shaft portion (72). The main shaft portion (71) includes a main journal portion (71a), a sub journal portion (71b), and an intermediate shaft portion (71c). The drive shaft (70) is placed so that the eccentric shaft portion (72) is positioned above the main shaft portion (71).

The main journal portion (71a), the intermediate shaft portion (71c), and the sub journal portion (71b) are provided in this order from one end to the other end of the main shaft portion (71). The main journal portion (71a), the intermediate shaft portion (71c), and the sub journal portion (71b) each have a columnar shape and are coaxial with one another. The main journal portion (71a) has a larger diameter than the intermediate shaft portion (71c), and the sub journal portion (71b) has a smaller diameter than the intermediate shaft portion (71c). The main journal portion (71a) is located above the intermediate shaft portion (71c), and the sub journal portion (71b) is located below the intermediate shaft portion (71c).

The main journal portion (71a) is inserted through the first bearing (91) embedded in the first bearing portion (82) of the first support portion (80) and is supported by the first bearing (91). The sub journal portion (71b) is inserted through the second bearing (92) embedded in the second bearing portion (86) of the second support portion (85) and is supported by the second bearing (92). The intermediate shaft portion (71c) is inserted through the rotor (62) of the motor (60) and is fixed to the rotor (62).

The eccentric shaft portion (72) has a relatively short shaft shape and protrudes from an end surface of the main journal portion (71a). The eccentric shaft portion (72) is located above the main shaft portion (71). A shaft center of the eccentric shaft portion (72) is substantially parallel to a shaft center of the main shaft portion (71), and is eccentric with respect to the shaft center of the main shaft portion (71). The eccentric shaft portion (72) is inserted through the third bearing (93) embedded in the boss portion (67c) of the orbiting scroll (67) and is supported by the third bearing (93).

<Bearings>

The first bearing (91), the second bearing (92), and the third bearing (93) each have a cylindrical shape and are slide bearings that support the drive shaft (70).

The first bearing (91) is embedded in the first bearing portion (82) of the first support portion (80). The main journal portion (71a) of the drive shaft (70) is inserted through the first bearing (91), and thus the first bearing (91) supports the main journal portion (71a) of the drive shaft (70).

The second bearing (92) is embedded in the second bearing portion (86) of the second support portion (85). The sub journal portion (71b) of the drive shaft (70) is inserted through the second bearing (92), and thus the second bearing (92) supports the sub journal portion (71b) of the drive shaft (70).

The third bearing (93) is embedded in the boss portion (67c) of the orbiting scroll (67). The eccentric shaft portion (72) of the drive shaft (70) is inserted through the third bearing (93), and thus the third bearing (93) supports the eccentric shaft portion (72) of the drive shaft (70).

<Oil Supply Path>

The compressor (50) is provided with an oil supply path (100). The oil supply path (100) is a path (passage) through which a lubricating oil (refrigerant oil) accumulated in the oil accumulation portion (54) provided in the bottom portion of the casing (51) is supplied to a sliding portion. The oil supply path (100) includes a main oil supply path (101) and a sub oil supply path (102).

The main oil supply path (101) is provided in the drive shaft (70). The main oil supply path (101) includes a main path extending in an axial direction from one end to the other end (from a lower end to an upper end in Fig. 2) of the drive shaft (70) in the axial direction and branch paths branching from the main path toward a "sliding portion of the drive shaft (70) with the first bearing (91)", a "sliding portion of the drive shaft (70) with the second bearing (92)", and a "sliding portion of the drive shaft (70) with the third bearing (93)". The main oil supply path (101) guides the lubricating oil (refrigerant oil) accumulated in the oil accumulation portion (54) to the sliding portions between the drive shaft (70) and the bearings (specifically, the first bearing (91), the second bearing (92), and the third bearing (93)).

The sub oil supply path (102) extends across the first support portion (80) and the fixed scroll (66) and guides the lubricating oil accumulated in the crank chamber (81a) to the compression chamber (68) of the compression mechanism (65) (specifically, a gap between the fixed scroll (66) and the orbiting scroll (67)). The sub oil supply path (102) is provided so that one end thereof is opened in the crank chamber (81a) and the other end thereof is opened in a gap between the peripheral wall portion (66c) of the fixed scroll (66) and the orbiting end plate (67a) of the orbiting scroll (67). In the crank chamber (81a), the lubricating oil that has been guided from the oil accumulation portion (54) to the sliding portion between the drive shaft (70) and the third bearing (93) through the main oil supply path (101), has lubricated the sliding portion, and has flowed from the sliding portion is accumulated. The sub oil supply path (102) guides the lubricating oil that has lubricated the sliding portion between the drive shaft (70) and the third bearing (93) from the crank chamber (81a) to the compression mechanism (65). The lubricating oil that has been guided to the compression mechanism (65) seals the compression chamber (68) (specifically, a gap between the fixed scroll (66) and the orbiting scroll (67)).

According to this configuration, the lubricating oil in the oil accumulation portion (54) on which the pressure (high pressure) of the working fluid discharged from the compression mechanism (65) acts flows into the main oil supply path (101) via a suction port (101a) of the main oil supply path (101), flows through the main oil supply path (101), and is supplied to the sliding portions between the drive shaft (70) and the bearings (specifically, the first bearing (91), the second bearing (92), and the third bearing (93)). The lubricating oil supplied to the sliding portion between the drive shaft (70) and the third bearing (93) is accumulated in the crank chamber (81a) after lubricating the sliding portion between the drive shaft (70) and the third bearing (93). The lubricating oil accumulated in the crank chamber (81a) is supplied to the compression chamber (68) of the compression mechanism (65) (specifically, the gap between the fixed scroll (66) and the orbiting scroll (67)) through the sub oil supply path (102) and seals the compression chamber (68).

[Findings Obtained by Inventors of Present Application]

As a result of diligent studies, the inventors of present application found that the states of the compressor (50) including the motor (60) and the compression mechanism (65) include a "state in which a specific frequency component included in a physical amount correlated with a state of the compressor (50) rapidly changes".

Specifically, the inventors of present application found a phenomenon "when sealability of the compression chamber (68) provided by the lubricating oil fails in the compressor (50), a specific frequency component included in a physical amount correlated with a state of the compressor (50) rapidly changes". In particular, the inventors of present application found a phenomenon "when the suction port (101a) of the oil supply path (100) is no longer immersed in the lubricating oil accumulated in the oil accumulation portion (54) in the compressor (50), sealability of the compression chamber (68) provided by the lubricating oil fails, and as a result, a specific frequency component included in a physical amount correlated with a state of the compressor (50) rapidly changes".

Furthermore, the inventors of present application found a phenomenon "when a liquid-form working fluid is drawn into the compression mechanism (65) and is compressed in the compression mechanism (65) in the compressor (50), a specific frequency component included in a physical amount that is correlated with a state of the compressor (50) rapidly changes".

Furthermore, the inventors of present application found that the above state (the state of the compressor (50) in which a specific frequency component rapidly changes) can be estimated on the basis of a magnitude of a temporal change of the specific frequency component included in the physical amount.

The findings obtained by the inventors of the present application are described in detail below. Note that the following describes, as an example, a case where the physical amount correlated with the state of the compressor (50) is a "current vector amplitude (Ia)", and the specific frequency component included in the physical amount is a "frequency component (hereinafter referred to as a "primary component") having a frequency equal to a mechanical angular frequency of the motor (60)". The "current vector amplitude (Ia)" is an example of a physical amount correlated with torque of the compressor (50) and is also an example of a physical amount correlated with a voltage or current of the motor (60). Note that the mechanical angular frequency of the motor (60) corresponds to a rotation frequency of the motor (60).

[Failure of Sealability of Compression Chamber (68) Provided by Lubricating Oil]

First, failure of sealability of the compression chamber (68) is described with reference to Fig. 2. When the suction port (101a) of the oil supply path (100) is no longer immersed in the lubricating oil accumulated in the oil accumulation portion (54) in the compressor (50), sealability of the compression chamber (68) provided by the lubricating oil fails, which rapidly reduces an amplitude of torque pulsation of the compressor (50). Specifically, the primary component of the rotation frequency of the motor (60) in torque rapidly decreases. Accordingly, when sealability of the compression chamber (68) provided by the lubricating oil fails, the primary component of the rotation frequency of the motor (60) in the current vector amplitude (Ia) rapidly decreases.

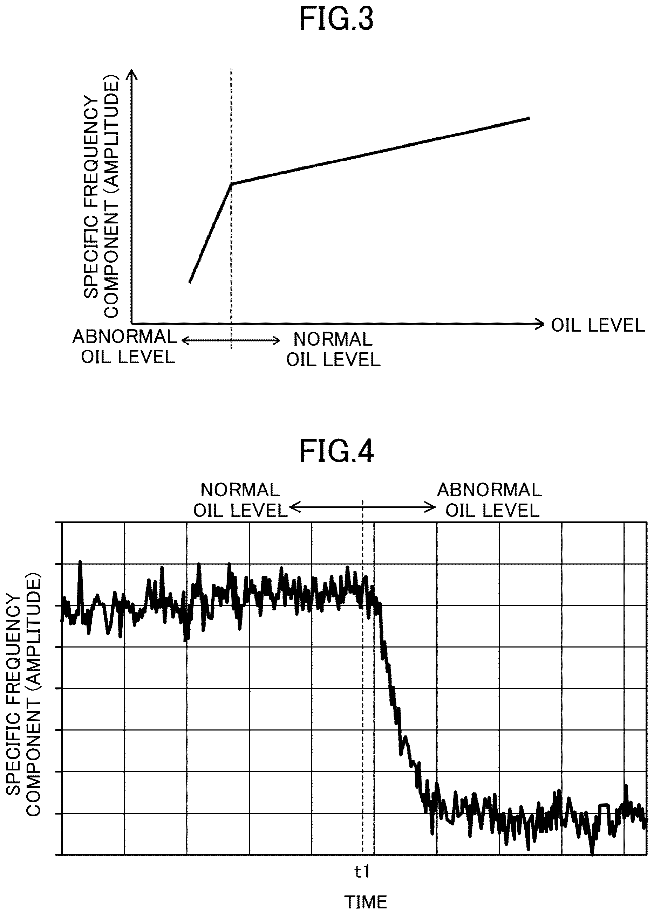

Next, change of the specific frequency component depending on change in level of oil accumulated in the oil accumulation portion (54) is described with reference to Figs. 3 and 4. In the following description, the "oil level" refers to a level of oil accumulated in the oil accumulation portion (54). A "normal oil level" refers to a state in which the suction port (101a) of the oil supply path (100) is immersed in the lubricating oil accumulated in the oil accumulation portion (54). An "abnormal oil level" refers to a state in which the suction port (101a) of the oil supply path (100) is not immersed in the lubricating oil accumulated in the oil accumulation portion (54).

As illustrated in Fig. 3, as the oil level gradually decreases, the amplitude value of the specific frequency component gradually decreases. Note that the oil level changes depending on an operating condition of the compressor (50). As illustrated in Fig. 4, when the oil level changes from the normal oil level to the abnormal oil level at a time (t1), the amplitude value of the specific frequency component rapidly decreases.

As illustrated in Figs. 3 and 4, the amplitude value of the specific frequency component under the abnormal oil level condition is smaller than the amplitude value of the specific frequency component under the normal oil level condition. To distinguish the normal oil level and the abnormal oil level, it may be possible to compare the magnitude (amplitude value) of the specific frequency component and a threshold value. However, since an error included in the specific frequency component (e.g., a sensor error, an error resulting from influence of pressure and temperature) need be considered to set the threshold value to be compared with the magnitude of the specific frequency component, it is sometimes difficult to appropriately set the threshold value.

For example, in a case where a median (e.g., a median of an assumed change range) of the specific frequency component under the normal oil level condition is "1.37A" and a median of the specific frequency component under the abnormal oil level condition is "0.75A", a threshold value used to distinguish the normal oil level and the abnormal oil level is desirably set to a value between "0.75A" and "1.37A". However, the value of the specific frequency component under the normal oil level condition has a range due to influence of an error (e.g., a sensor error, an error resulting from influence of pressure and temperature) and the oil level, and a minimum value thereof is "0.85A". Similarly, the value of the specific frequency component under the abnormal oil level condition also has a range due to influence of an error, and a maximum value thereof is "1.23A". It is therefore impossible to appropriately set the threshold value. Note that a reason why the value of the specific frequency component changes due to influence of the error and the oil level is that a waveform of a physical amount (a physical amount correlated with a state of the compressor (50)) changes due to influence of the error and the oil level.

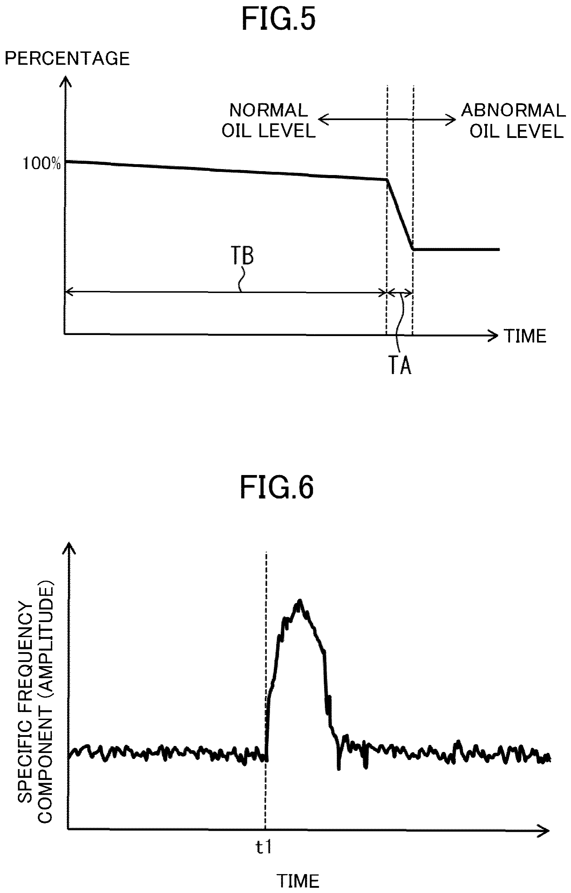

Note that a temporal change of the specific frequency component (a temporal change during a period (TA) in the example of Fig. 5) during occurrence of failure of sealability of the compression chamber (68) provided by the lubricating oil is far larger than a temporal change of the specific frequency component (a temporal change during a period (TB) in the example of Fig. 5) resulting from an increase or decrease of the oil level under the normal oil level condition, as illustrated in Fig. 5. The vertical axis of Fig. 5 represents percentage of an amplitude value of the specific frequency component relative to an amplitude value (100%) of the specific frequency component at the beginning of the period (TB) (a rate relative to the reference). For example, a temporal change of the specific frequency component during occurrence of failure of sealability of the compression chamber (68) provided by the lubricating oil is "a 40% decrease in 30 seconds (1.333%/sec), and a temporal change of the specific frequency component resulting from an increase or decrease of the oil level under the normal oil level condition is "a 11% decrease in 1800 seconds (0.006%/sec)".

Therefore, the rapid change (specifically, rapid decrease) of the specific frequency component during occurrence of failure of sealability of the compression chamber (68) provided by the lubricating oil can be distinguished on the basis of the magnitude of the temporal change of the specific frequency component. For example, it can be estimated whether or not the compressor (50) is in a "state in which sealability of the compression chamber (68) provided by the lubricating oil has failed" by comparing a value indicative of the magnitude of the temporal change of the specific frequency component with a threshold value.

The error included in the specific frequency component (e.g., a sensor error, an error resulting from influence of pressure and temperature) need not be considered to set the threshold value to be compared with the magnitude of the temporal change of the specific frequency component. It is therefore possible to appropriately set the threshold value as compared with the case where the threshold value to be compared with the specific frequency component is set.

Specifically, a temporal change of the specific frequency component resulting from a change in pressure and temperature is sufficiently smaller than the temporal change of the specific frequency component during occurrence of failure of the sealability of the compression chamber (68) provided by the lubricating oil. Furthermore, the temporal change of the specific frequency component resulting from a change in pressure and temperature is sufficiently smaller than a difference between "the temporal change of the specific frequency component during occurrence of failure of the sealability of the compression chamber (68) provided by the lubricating oil" and "the temporal change of the specific frequency component resulting from an increase or decrease in oil level under the normal oil level condition".

Note that it may be possible to individually prepare a threshold value for each sensor or for each pressure and temperature to reduce the error included in the specific frequency component. However, this method complicates a state estimation algorithm and increases a computational load, thereby inviting an increase in cost of a computing unit such as a processor. On the other hand, according to the method according to the embodiment (state estimation based on the magnitude of the temporal change of the specific frequency component), it is only necessary to set a single threshold value for the temporal change of the specific frequency component, and therefore an increase in computational load can be kept small, and an existing processor can be used as it is.

Furthermore, it may be possible to separately provide a sensor that detects an oil level to grasp the influence of the oil level on the specific frequency component. However, according to this method, the sensor installation invites an increase in cost. On the other hand, according to the method according to the embodiment (state estimation based on the magnitude of the temporal change of the specific frequency component), it is unnecessary to separately provide a sensor that detects an oil level, and therefore an increase in cost caused by sensor installation can be avoided.

Furthermore, according to the method according to the embodiment (state estimation based on the magnitude of the temporal change of the specific frequency component), a change in current waveform during occurrence of an abnormality can be grasped by focusing on the frequency component. By thus focusing on the frequency component, an abnormality can be detected with higher accuracy than a case where an effective value or an average value is monitored.

[Liquid Compression]

Next, liquid compression is described with reference to Fig. 6. When a liquid-form working fluid is drawn into the compression mechanism (65) and is compressed in the compression mechanism (65) in the compressor (50), the amplitude of torque pulsation of the compressor (50) rapidly increases. Specifically, the magnitude of the primary component of the rotation frequency of the motor (60) in torque rapidly increases. Accordingly, when liquid compression occurs, the primary component of the rotation frequency of the motor (60) in the current vector amplitude (Ia) rapidly increases.

As illustrated in Fig. 6, when liquid compression occurs at a time (t1), the amplitude value of the specific frequency component rapidly increases. Then, when the liquid-form working fluid disappears from the compression mechanism (65), the amplitude value of the specific frequency component returns to its original value.

As illustrated in Fig. 6, the amplitude value of the specific frequency component during liquid compression is larger than the amplitude value of the specific frequency component during a normal operation. Therefore, it may be possible to compare the magnitude (amplitude value) of the specific frequency component with a threshold value to distinguish the normal operation and the liquid compression. However, it is sometimes difficult to appropriately set the threshold value since the error included in the specific frequency component (e.g., a sensor error, an error resulting from influence of pressure and temperature) need be considered to set the threshold value to be compared with the magnitude of the specific frequency component.

For example, in a case where a median (e.g., a median of an assumed change range) of the specific frequency component during the normal operation is "1.37A" and a median of the specific frequency component during the liquid compression is "1.96A", a threshold value used to distinguish the normal operation and the liquid compression is desirably set to a value between "1.37A" and "1.96A". However, the value of the specific frequency component during the normal operation has a range due to influence of the error (e.g., a sensor error, an error resulting from influence of pressure and temperature) and the oil level, and a maximum value thereof is "1.89A". Similarly, the value of the specific frequency component during the liquid compression also has a range due to influence of the error and the oil level, and a minimum value thereof is "1.44A". It is therefore impossible to appropriately set the threshold value.

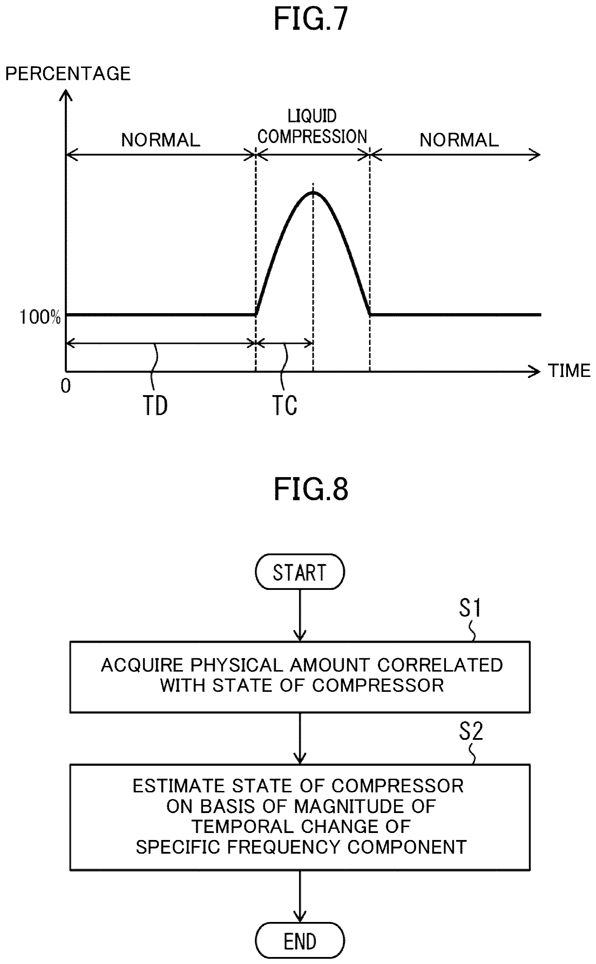

Note that a temporal change of the specific frequency component during occurrence of liquid compression (a temporal change during a period (TC) in the example of Fig. 7) is far larger than a temporal change of the specific frequency component during the normal operation (a temporal change during a period (TD) in the example of Fig. 7), as illustrated in Fig. 7. The vertical axis of Fig. 7 represents percentage of an amplitude value of the specific frequency component relative to an amplitude value (100%) of the specific frequency component at the beginning of the period (TD) (a rate relative to the reference). For example, the temporal change of the specific frequency component during occurrence of liquid compression is "a 43% increase in 20 seconds (2.15%/sec), and the temporal change of the specific frequency component during the normal operation is "a 11% increase or decrease in 1800 seconds (0.006%/sec)".

Therefore, the rapid change (specifically, rapid increase) of the specific frequency component during liquid compression can be distinguished on the basis of the magnitude of the temporal change of the specific frequency component. For example, it can be estimated whether or not the compressor (50) is in a "liquid compression state" by comparing a value indicative of the magnitude of the temporal change of the specific frequency component with the threshold value.

The error included in the specific frequency component (e.g., a sensor error, an error resulting from influence of pressure and temperature) need not be considered to set the threshold value to be compared with the magnitude of the temporal change of the specific frequency component. It is therefore possible to appropriately set the threshold value as compared with the case where the threshold value to be compared with the magnitude of the specific frequency component is set.

Specifically, the temporal change of the specific frequency component resulting from a change in pressure and temperature is sufficiently smaller than the temporal change of the specific frequency component during occurrence of liquid compression. Furthermore, the temporal change of the specific frequency component resulting from a change in pressure and temperature is sufficiently smaller than a difference between "the temporal change of the specific frequency component during occurrence of liquid compression" and "the temporal change of the specific frequency component during the normal operation".

[Details of Estimation Processing]

In the estimation processing, the control unit (31) estimates whether or not the compressor (50) is in a "state in which the specific frequency component rapidly changes" on the basis of the magnitude of the temporal change of the specific frequency component included in the physical amount correlated with the state of the compressor (50). For example, it can be said that the "state in which the specific frequency component rapidly changes" is a "state in which a change amount of the specific frequency component per unit time is larger than a predetermined reference amount".

Note that in this example, the physical amount is a physical amount correlated with the torque of the compressor (50). The physical amount is a physical amount correlated with a voltage or current of the motor (60). The control unit (31) performs the estimation processing on the basis of a signal indicative of the physical amount. Specific examples of the signal indicative of the physical amount will be described in detail later.

In this example, the frequency of the specific frequency component is a frequency synchronized with the mechanical angular frequency of the motor (60). In other words, the frequency of the specific frequency component is a frequency corresponding to the mechanical angular frequency of the motor (60). Specifically, the frequency of the specific frequency component is equal to an integral multiple of the mechanical angular frequency of the motor (60) or N/M times the mechanical angular frequency of the motor (60). Note that M and N are integers, and N is smaller than M.

In this example, in the estimation processing, the control unit (31) estimates whether or not the compressor (50) is in a "state in which the sealability of the compression chamber provided by the lubricating oil has failed". Alternatively, the control unit (31) estimates whether or not the compressor (50) is in a "liquid compression state in which the liquid-form working fluid is drawn into the compression mechanism (65) and is compressed in the compression mechanism (65)".

In other words, in this example, the "state in which the specific frequency component rapidly changes" of the compressor (50) estimated by the control unit (31) is the "state in which sealability of the compression chamber provided by the lubricating oil has failed" or the "liquid compression state in which the liquid-form working fluid is drawn into the compression mechanism (65) and is compressed in the compression mechanism (65)".

In this example, the "state in which sealability of the compression chamber provided by the lubricating oil has failed" is specifically a "state in which the suction port (101a) of the oil supply path (100) is not immersed in the lubricating oil accumulated in the oil accumulation portion (54) and thus the sealability of the compression chamber provided by the lubricating oil has failed". The control unit (31) may estimate whether or not the compressor (50) is in a "state in which the suction port (101a) of the oil supply path (100) is not immersed in the lubricating oil accumulated in the oil accumulation portion (54)".

[Flow of Estimation Processing]

Next, flow of the estimation processing is described with reference to Fig. 8. The control unit (31) repeatedly performs the following processes.

<Step (S1): Acquisition Step>

First, the control unit (31) acquires the physical amount (e.g., the current vector amplitude (Ia)) correlated with the state of the compressor (50). In this example, the control unit (31) acquires the physical amount on the basis of information obtained by the various sensors (information for obtaining the physical amount correlated with the state of the compressor (50)) at each predetermined derivation time. By thus repeatedly performing such a process, the physical amount is acquired at each derivation time.

Note that the sensor for acquiring the "information for obtaining the physical amount correlated with the state of the compressor (50)" in the estimation processing may also be used as a sensor (e.g., a current sensor) used in the control processing or may be a sensor provided separately from the sensor used in the control processing.

<Step (S2): Estimation Step>

Next, the control unit (31) estimates the state of the compressor (50) on the basis of a magnitude of a temporal change of the specific frequency component (e.g., the primary component) included in the physical amount obtained in step (S1). In this example, the control unit (31) derives a value (hereinafter referred to as an "index value") indicative of the magnitude of the temporal change of the specific frequency component included in the physical amount obtained in step (S1) on the basis of the physical amount at each predetermined estimation time. Then, the control unit (31) compares the index value and a threshold value, and estimates whether or not the compressor (50) is in a "state in which the specific frequency component rapidly changes" in accordance with a result of the comparison. By repeatedly performing such a process, the index value is derived at each estimation time, and the state of the compressor (50) is estimated on the basis of the index value. A specific example of the estimation processing will be described in detail later.

[Effects of Embodiment]

As described above, in the drive system (10) according to the embodiment, the control unit (31) estimates the state of the compressor (50) on the basis of the magnitude of the temporal change of the specific frequency component included in the physical amount correlated with the state of the compressor (50) in the estimation processing.
According to the above configuration, it is possible to estimate whether or not the compressor (50) is the "state in which the specific frequency component rapidly changes" by estimating the state of the compressor (50) on the basis of the magnitude of the temporal change of the specific frequency component.
In the drive system (10) according to the embodiment, the compression mechanism (65) includes the compression chamber (68) for compressing a working fluid. The compression chamber (68) is sealed by the lubricating oil. In the estimation processing, the control unit (31) estimates whether or not the compressor (50) is in the "state in which sealability of the compression chamber (68) provided by the lubricating oil has failed".
According to the above configuration, it is possible to estimate whether or not the compressor (50) is in the "state in which sealability of the compression chamber (68) provided by the lubricating oil has failed" on the basis of the magnitude of the temporal change of the specific frequency component.
In the drive system (10) according to the embodiment, the compression mechanism (65) includes the compression chamber (68) for compressing a working fluid. The compressor (50) includes the oil accumulation portion (54) in which the lubricating oil is accumulated and the oil supply path (100) for supplying the lubricating oil accumulated in the oil accumulation portion (54) to the compression chamber (68). The oil supply path (100) has the suction port (101a), and when the suction port (101a) is immersed in the lubricating oil accumulated in the oil accumulation portion (54), the lubricating oil sucked from the suction port (101a) can be supplied to the compression chamber (68). The compression chamber (68) is sealed by the lubricating oil. In the estimation processing, the control unit (31) estimates whether or not the compressor (50) is in the "state in which the suction port (101a) of the oil supply path (100) is not immersed in the lubricating oil accumulated in the oil accumulation portion (54)".
According to the above configuration, it is possible to estimate that the compressor (50) is in the "state in which the suction port (101a) of the oil supply path (100) is not immersed in the lubricating oil accumulated in the oil accumulation portion (54)" on the basis of the magnitude of the temporal change of the specific frequency component.
In the drive system (10) according to the embodiment, the control unit (31) estimates whether or not the compressor (50) is in a "liquid compression state in which the liquid-form working fluid is drawn into the compression mechanism (65) and is compressed in the compression mechanism (65)" in the estimation processing.
According to the above configuration, it is possible to estimate that the compressor (50) is in the "liquid compression state in which the liquid-form working fluid is drawn into the compression mechanism (65) and is compressed in the compression mechanism (65)" on the basis of the magnitude of the temporal change of the specific frequency component.

(Specific Examples of Signal indicative of Physical Amount)

Next, specific examples of the "signal indicative of a physical amount correlated with a voltage or current of the motor (60)" are described. This signal is largely classified into a direct-current signal and an alternating-current signal.

[Specific Examples of Direct-Current Signal]

Examples of the direct-current signal include a "signal correlated with the phase currents (iu, iv, iw) of the motor (60)", a "signal correlated with the phase voltages (Vu, Vv, Vw) of the motor (60)", and a "signal correlated with electric power of the motor (60)".

Other examples of the direct-current signal include "currents (iγ, iδ) obtained by performing coordinate transformation on the phase currents (iu, iv, iw) of the motor (60) by using the phase (ωi·t) of the phase currents (iu, iv, iw) of the motor (60)", "voltages (Vγ, Vδ) obtained by performing coordinate transformation on the phase voltages (Vu, Vv, Vw) of the motor (60) by using the phase (ωv·t) of the phase voltages (Vu, Vv, Vw) of the motor (60)", "currents (iζ, iη) obtained by performing coordinate transformation on the phase currents (iu, iv, iw) of the motor (60) by using the phase (ωv·t) of the phase voltages (Vu, Vv, Vw) of the motor (60)", and "voltages (Vζ, Vη) obtained by performing coordinate transformation on the phase voltages (Vu, Vv, Vw) of the motor (60) by using the phase (ωi·t) of the phase currents (iu, iv, iw) of the motor (60)".

Still other examples of the direct-current signal include a "d-q axis magnetic fluxes (λd, λq) obtained by performing coordinate transformation in accordance with an armature interlinkage magnetic flux generated by a permanent magnet" and a "magnitude λ0 of an armature interlinkage magnetic flux vector obtained by combining the armature interlinkage magnetic flux of the permanent magnet and an armature reaction".

In the following description, "the phase currents (iu, iv, iw) of the motor (60)" are phase currents (iu, iv, iw) of the motor (60) detected by the phase current detection unit (41). The "phase voltages (Vu, Vv, Vw) of the motor (60)" refer to the phase voltages (Vu, Vv, Vw) of the motor (60) indicated by a voltage command value used in the control unit (31) or the phase voltages (Vu, Vv, Vw) of the motor (60) detected by a phase voltage detection unit (not illustrated) provided in the motor drive device (20). The "electrical angular frequency (ω) of the motor (60)" refers to the electrical angular frequency (ω) of the motor (60) detected by the electrical angular frequency detection unit (42).

[1. Specific Examples of Signal Correlated with Phase Currents of Motor]

Specific examples of the signal correlated with the phase currents (iu, iv, iw) of the motor (60) include a current vector amplitude (Ia), a square value ($Ia^2$) of the current vector amplitude, a phase current amplitude (I), and a phase current effective value (Irms).

Note that the current vector amplitude (Ia) and the square value ($Ia^2$) of the current vector amplitude are examples of a value corresponding to a total sum of square values of the three phase currents (iu, iv, iw) of the motor (60). The value corresponding to the total sum of square values of the three phase currents (iu, iv, iw) of the motor (60) is an example of a value proportional to an integer power of the magnitude of the phase currents (iu, iv, iw) of the motor (60).

(1) Current Vector Amplitude

The current vector amplitude (Ia) is derived on the basis of the phase currents (iu, iv, iw) of the motor (60). The current vector amplitude (Ia) may be derived on the basis of a α-phase current (iα) and a β-phase current (iβ) obtained by transforming the phase currents (iu, iv, iw) of the motor (60) into a fixed system of coordinates. The current vector amplitude (Ia) may be derived on the basis of an M-axis current (iM) and a T-axis current (iT) obtained by performing coordinate transformation on the phase currents (iu, iv, iw) of the motor (60) by using an angle based on a direction of a primary magnetic flux. The current vector amplitude (Ia) may be derived on the basis of a d-axis current (id) and a q-axis current (iq) obtained by performing coordinate transformation on the phase currents (iu, iv, iw) of the motor (60) by using an angle based on a direction of a magnetic pole position. Specifically, the current vector amplitude (Ia) can be expressed by the following expression.

[Math. 1]

$$I_a = \sqrt{i_u^2 + i_v^2 + i_w^2} = \sqrt{i_\alpha^2 + i_\beta^2} = \sqrt{i_M^2 + i_T^2} = \sqrt{i_d^2 + i_q^2}$$

(2) Square Value of Current Vector Amplitude

The square value ($Ia^2$) of the current vector amplitude is derived on the basis of the phase currents (iu, iv, iw) of the motor (60). The square value ($Ia^2$) of the current vector amplitude may be derived on the basis of an α-phase current (iα) and a β-phase current (iβ) obtained by transforming the phase currents (iu, iv, iw) of the motor (60) into a fixed system of coordinates. The square value ($Ia^2$) of the current vector amplitude may be derived on the basis of an M-axis current (iM) and a T-axis current (iT) obtained by performing coordinate transformation on the phase currents (iu, iv, iw) of the motor (60) by using an angle based on a direction of a primary magnetic flux. The square value ($Ia^2$) of the current vector amplitude may be derived on the basis of a d-axis current (id) and a q-axis current (iq) obtained by performing coordinate transformation on the phase currents (iu, iv, iw) of the motor (60) by using an angle based on a direction of a magnetic pole position. Specifically, the square value (Ia$^2$) of the current vector amplitude can be expressed by the following expression.

[Math. 2]

$$I_a^2 = i_u^2 + i_v^2 + i_w^2 = i_\alpha^2 + i_\beta^2 = i_M^2 + i_T^2 = i_d^2 + i_q^2$$

(3) Phase Current Amplitude

The phase current amplitude (I) is derived on the basis of one (e.g., the U-phase current (iu)) of the phase currents (iu, iv, iw) of the motor (60) and the phase ($\omega$i) of the phase currents. Note that the phase ($\omega$i) of the phase currents is, for example, derived on the basis of the phase currents (iu, iv, iw) of the motor (60). Specifically, the phase current amplitude (I) can be expressed by the following expression.

[Math. 3]

$$I = \frac{i_u}{\cos \omega_i t}$$

(4) Phase Current Effective Value

The phase current effective value (Irms) is derived on the basis of the phase current amplitude (I). Specifically, the phase current effective value (Irms) can be expressed by the following expression.

[Math. 4]

$$I_{rms} = \frac{I}{\sqrt{2}}$$

(5) Other Remarks

Although a case where the current vector amplitude (Ia) is derived on the basis of the three phase currents (iu, iv, iw) of the motor (60) has been described as an example in the above description, the current vector amplitude (Ia) may be derived on the basis of two of the three phase currents (iu, iv, iw) of the motor (60). Alternatively, the current vector amplitude (Ia) may be derived on the basis of a DC current of the inverter (23) detected by a DC current detection unit (e.g., a shunt resistor, not illustrated) provided in the motor drive device (20). The same applies to the square value (Ia$^2$) of the current vector amplitude.

[2. Specific Examples of Signal Correlated with Phase Voltages of Motor]

Specific examples of the signal correlated with the phase voltages (Vu, Vv, Vw) of the motor (60) include a voltage vector amplitude (Va), a square value (Va$^2$) of the voltage vector amplitude, a phase voltage amplitude (V), and a phase voltage effective value (Vrms).
Note that the voltage vector amplitude (Va) and the square value (Va$^2$) of the voltage vector amplitude are examples of a value corresponding to a total sum of square values of the three phase voltages (Vu, Vv, Vw) of the motor (60). The value corresponding to the total sum pf square values of the three phase voltages (Vu, Vv, Vw) of the motor (60) is an example of a value proportional to an integer power of the magnitude of the phase voltages (Vu, Vv, Vw) of the motor (60).

(1) Voltage Vector Amplitude

The voltage vector amplitude (Va) is derived on the basis of the phase voltages (Vu, Vv, Vw) of the motor (60). The voltage vector amplitude (Va) may be derived on the basis of an $\alpha$-phase voltage (V$\alpha$) and a $\beta$-phase voltage (V$\beta$) obtained by transforming the phase voltages (Vu, Vv, Vw) of the motor (60) into a fixed system of coordinates. The voltage vector amplitude (Va) may be derived on the basis of an M-axis voltage (VM) and a T-axis voltage (VT) obtained by performing coordinate transformation on the phase voltages (Vu, Vv, Vw) of the motor (60) by using an angle based on a direction of a primary magnetic flux. The voltage vector amplitude (Va) may be derived on the basis of a d-axis voltage (Vd) and a q-axis voltage (Vq) obtained by performing coordinate transformation on the phase voltages (Vu, Vv, Vw) of the motor (60) by using an angle based on a direction of a magnetic pole position. Specifically, the voltage vector amplitude (Va) can be expressed by the following expression.

[Math. 5]

$$V_a = \sqrt{v_u^2 + v_v^2 + v_w^2} = \sqrt{v_\alpha^2 + v_\beta^2} = \sqrt{v_M^2 + v_T^2} = \sqrt{v_d^2 + v_q^2}$$

(2) Square Value of Voltage Vector Amplitude

The square value (Va$^2$) of the voltage vector amplitude is derived on the basis of the phase voltages (Vu, Vv, Vw) of the motor (60). The square value (Va$^2$) of the voltage vector amplitude may be derived on the basis of an α-phase voltage (Vα) and a β-phase voltage (Vβ) obtained by transforming the phase voltages (Vu, Vv, Vw) of the motor (60) into a fixed system of coordinates. The square value (Va$^2$) of the voltage vector amplitude may be derived on the basis of an M-axis voltage (VM) and a T-axis voltage (VT) obtained by performing coordinate transformation on the phase voltages (Vu, Vv, Vw) of the motor (60) by using an angle based on a direction of a primary magnetic flux. The square value (Va$^2$) of the voltage vector amplitude may be derived on the basis of a d-axis voltage (Vd) and a q-axis voltage (Vq) obtained by performing coordinate transformation on the phase voltages (Vu, Vv, Vw) of the motor (60) by using an angle based on a direction of a magnetic pole position. Specifically, the square value (Va$^2$) of the voltage vector amplitude can be expressed by the following expression.

[Math. 6]

$$V_a^2 = v_u^2 + v_v^2 + v_w^2 = v_\alpha^2 + v_\beta^2 = v_M^2 + v_T^2 = v_d^2 + v_q^2$$

(3) Phase Voltage Amplitude

The phase voltage amplitude (V) is derived on the basis of one (e.g., the U-phase voltage (Vu)) of the phase voltages (Vu, Vv, Vw) of the motor (60) and the phase (ωv) of the phase voltages. Note that the phase (ωv) of the phase voltages is, for example, derived on the basis of the phase voltages (Vu, Vv, Vw) of the motor (60). Specifically, the phase voltage amplitude (V) can be expressed by the following expression.

[Math. 7]

$$V = \frac{v_u}{\cos \omega_v t}$$

(4) Phase Voltage Effective Value

The phase voltage effective value (Vrms) is derived on the basis of the phase voltage amplitude (V). Specifically, the phase voltage effective value (Vrms) can be expressed by the following expression.

[Math. 8]

$$V_{rms} = \frac{V}{\sqrt{2}}$$

(5) Other Remarks

Although a case where the voltage vector amplitude (Va) is derived on the basis of the three phase voltages (Vu, Vv, Vw) of the motor (60) has been described as an example in the following description, the voltage vector amplitude (Va) may be derived on the basis of two of the three phase voltages (Vu, Vv, Vw) of the motor (60). The same applies to the square value (Va$^2$) of the voltage vector amplitude.

[3. Specific Examples of Signal Correlated with Electric Power of Motor]

Examples of the signal correlated with the electric power of the motor (60) include instantaneous electric power (p), instantaneous imaginary electric power (q), apparent electric power (S), active electric power (P), and reactive electric power (Q).

(1) Instantaneous Electric Power

The instantaneous electric power (p) is derived on the basis of the phase currents (iu, iv, iw) of the motor (60) and the phase voltages (Vu, Vv, Vw) of the motor (60). The instantaneous electric power (p) may be derived on the basis of an α-phase current (iα) and a β-phase current (iβ) obtained by transforming the phase currents (iu, iv, iw) of the motor (60) into a fixed system of coordinates and an α-phase voltage (Vα) and a β-phase voltage (Vβ) obtained by transforming the phase voltages (Vu, Vv, Vw) of the motor (60) into a fixed system of coordinates. The instantaneous electric power (p) may be derived on the basis of an M-axis current (iM) and a T-axis current (iT) obtained by performing coordinate transformation on the phase currents (iu, iv, iw) of the motor (60) by using an angle based on a direction of a primary magnetic flux and an M-axis voltage (VM) and a T-axis voltage (VT) obtained by performing coordinate transformation on the phase voltages (Vu, Vv, Vw) of the motor (60) by using an angle based on a direction of a primary magnetic flux. The instantaneous electric power (p) may be derived on the basis of a d-axis current (id) and a q-axis current (iq) obtained by performing coordinate transformation on the phase currents (iu, iv, iw) of the motor (60) by using an angle based on a direction of a magnetic pole position and a d-axis voltage (Vd) and a q-axis voltage (Vq) obtained by performing coordinate transformation on the phase voltages (Vu, Vv, Vw) of the motor (60) by using an angle based on a direction of a magnetic pole position. Specifically, the instantaneous electric power (p) can be expressed by the following expression.

[Math. 9]

$$p = v_u i_u + v_v i_v + v_w i_w = v_\alpha i_\alpha + v_\beta i_\beta = v_M i_M + v_T i_T = v_d i_d + v_q i_q$$

(2) Instantaneous Imaginary Electric Power

The instantaneous imaginary electric power (q) is derived on the basis of an α-phase current (iα) and a β-phase current (iβ) obtained by transforming the phase currents (iu, iv, iw) of the motor (60) into a fixed system of coordinates and an α-phase voltage (Vα) and a β-phase voltage (Vβ) obtained by transforming the phase voltages (Vu, Vv, Vw) of the motor (60) into a fixed system of coordinates. The instantaneous imaginary electric power (q) may be derived on the basis of an M-axis current (iM) and a T-axis current (iT) obtained by performing coordinate transformation on the phase currents (iu, iv, iw) of the motor (60) by using an angle based on a direction of a primary magnetic flux and an M-axis voltage (VM) and a T-axis voltage (VT) obtained by performing coordinate transformation on the phase voltages (Vu, Vv, Vw) of the motor (60) by using an angle based on a direction of a primary magnetic flux. The instantaneous imaginary electric power (q) may be derived on the basis of a d-axis current (id) and a q-axis current (iq) obtained by performing coordinate transformation on the phase currents (iu, iv, iw) of the motor (60) by using an angle based on a direction of a magnetic pole position and a d-axis voltage (Vd) and a q-axis voltage (Vq) obtained by performing coordinate transformation on the phase voltages (Vu, Vv, Vw) of the motor (60) by using an angle based on a direction of a magnetic pole position. Specifically, the instantaneous imaginary electric power (q) can be expressed by the following expression.

[Math. 10]

$$q = v_\alpha i_\beta - v_\beta i_\alpha = v_M i_T - v_T i_M = v_d i_q - v_q i_d$$

(3) Apparent Electric Power

The apparent electric power (S) is derived on the basis of the phase voltage effective value (Vrms) and the phase current effective value (Irms). Specifically, the apparent electric power (S) can be expressed by the following expression.

[Math. 11]

$$S = 3V_{rms}I_{rms}$$

(4) Active Electric Power

The active electric power (P) is derived on the basis of the phase voltage effective value (Vrms), the phase current effective value (Irms), and a phase difference ($\varphi$1) between a phase voltage and a phase current. The phase difference ($\varphi$1) between the phase voltage and the phase current is a phase difference between one phase voltage (e.g., the U-phase voltage (Vu)) and one phase current (e.g., the U-phase current (iu)) and is derived on the basis of the phase ($\omega$i) of the phase current and the phase ($\omega$v) of the phase voltage. Specifically, the active electric power (P) can be expressed by the following expression.

[Math. 12]

$$P = 3V_{rms}I_{rms}\cos\varphi_1$$

(5) Reactive Electric Power

The reactive electric power (Q) is derived on the basis of the phase voltage effective value (Vrms), the phase current effective value (Irms), and the phase difference ($\varphi$1) between the phase voltage and the phase current. The phase difference ($\varphi$1) between the phase voltage and the phase current is, for example, a phase difference between the U-phase voltage (Vu) and the U-phase current (iu) and is derived on the basis of the phase ($\omega$i) of the phase current and the phase ($\omega$v) of the phase voltage. Specifically, the reactive electric power (Q) can be expressed by the following expression.

[Math. 13]

$$Q = -3V_{rms}I_{rms}\sin\varphi_1$$

[4. Currents Obtained by Performing Coordinate Transformation on Phase Currents by Using Phase of Phase Currents]

Currents ($i\gamma$, $i\delta$) obtained by performing coordinate transformation on the phase currents (iu, iv, iw) of the motor (60) by using the phase ($\omega$i·t) of the phase current (iu, iv, iw) of the motor (60) can be expressed by the following expression.

[Math. 14]

$$\begin{bmatrix} i_\gamma \\ i_\delta \end{bmatrix} = k \begin{bmatrix} \cos\omega_i t & \cos\left(\omega_i t - \dfrac{2}{3}\pi\right) & \cos\left(\omega_i t - \dfrac{4}{3}\pi\right) \\ -\sin\omega_i t & -\sin\left(\omega_i t - \dfrac{2}{3}\pi\right) & -\sin\left(\omega_i t - \dfrac{4}{3}\pi\right) \end{bmatrix} \begin{bmatrix} i_u \\ i_v \\ i_w \end{bmatrix}$$

[5. Voltages Obtained by Performing Coordinate Transformation on Phase Voltages by Using Phase of Phase Voltages]

Voltages (V$\gamma$, V$\delta$) obtained by performing coordinate transformation on the phase voltages (Vu, Vv, Vw) of the motor (60) by using the phase ($\omega$v·t) of the phase voltages (Vu, Vv, Vw) of the motor (60) can be expressed by the following expression.

[Math. 15]

$$\begin{bmatrix} v_\gamma \\ v_\delta \end{bmatrix} = k \begin{bmatrix} \cos \omega_v t & \cos\left(\omega_v t - \dfrac{2}{3}\pi\right) & \cos\left(\omega_v t - \dfrac{4}{3}\pi\right) \\ -\sin \omega_v t & -\sin\left(\omega_v t - \dfrac{2}{3}\pi\right) & -\sin\left(\omega_v t - \dfrac{4}{3}\pi\right) \end{bmatrix} \begin{bmatrix} v_u \\ v_v \\ v_w \end{bmatrix}$$

[6. Currents Obtained by Performing Coordinate Transformation on Phase Currents by Using Phase of Phase Voltages]

Currents (iζ, iη) obtained by performing coordinate transformation on the phase currents (iu, iv, iw) of the motor (60) by using the phase (ωv·t) of the phase voltages (Vu, Vv, Vw) can be expressed by the following expression.

[Math. 16]

$$\begin{bmatrix} i_\zeta \\ i_\eta \end{bmatrix} = k \begin{bmatrix} \cos \omega_v t & \cos\left(\omega_v t - \dfrac{2}{3}\pi\right) & \cos\left(\omega_v t - \dfrac{4}{3}\pi\right) \\ -\sin \omega_v t & -\sin\left(\omega_v t - \dfrac{2}{3}\pi\right) & -\sin\left(\omega_v t - \dfrac{4}{3}\pi\right) \end{bmatrix} \begin{bmatrix} i_u \\ i_v \\ i_w \end{bmatrix}$$

[7. Voltages Obtained by Performing Coordinate Transformation on Phase Voltages by Using Phase of Phase Currents]

Voltages (Vζ, Vη) obtained by performing coordinate transformation on the phase voltages (Vu, Vv, Vw) of the motor (60) by using the phase (ωi·t) of the phase currents (iu, iv, iw) of the motor (60) can be expressed by the following expression.

[Math. 17]

$$\begin{bmatrix} v_\zeta \\ v_\eta \end{bmatrix} = k \begin{bmatrix} \cos \omega_i t & \cos\left(\omega_i t - \dfrac{2}{3}\pi\right) & \cos\left(\omega_i t - \dfrac{4}{3}\pi\right) \\ -\sin \omega_i t & -\sin\left(\omega_i t - \dfrac{2}{3}\pi\right) & -\sin\left(\omega_i t - \dfrac{4}{3}\pi\right) \end{bmatrix} \begin{bmatrix} v_u \\ v_v \\ v_w \end{bmatrix}$$

[8. dq-axis Magnetic Fluxes and Magnitude of Armature Interlinkage Magnetic Flux Vector]

dq-axis magnetic fluxes (λd, λq) obtained by performing coordinate transformation in accordance with an armature interlinkage magnetic flux generated by a permanent magnet and a magnitude λ0 of an armature interlinkage magnetic flux vector combining the armature interlinkage magnetic flux of the permanent magnet and armature reaction can be expressed by the following expression. In the following expression, "Ld" is d-axis inductance, and "Lq" is q-axis inductance.

[Math. 18]

$$\begin{bmatrix} \lambda_d \\ \lambda_q \end{bmatrix} = \begin{bmatrix} L_d & 0 \\ 0 & L_q \end{bmatrix} \begin{bmatrix} i_d \\ i_q \end{bmatrix} + \begin{bmatrix} \Lambda_a \\ 0 \end{bmatrix}$$

$$\lambda_0 = \sqrt{\lambda_d^2 + \lambda_q^2}$$

[9. Other Examples of Direct-Current Signal]

The direct-current signal may be a direct-current signal obtained by performing three-phase to two-phase transformation and then rotational coordinate transformation on phase currents, phase voltages, line currents, and line-to-line voltages of the motor (60). For example, the direct-current signal may be a d-axis current and a q-axis current obtained by performing three-phase to two-phase transformation on the phase currents of the motor (60) and then performing rotational coordinate transformation on an $\alpha$-axis current and a $\beta$-axis current thus obtained by using an angle based on a direction of a rotor magnetic pole of the motor (60). The direct-current signal may be an M-axis current and a T-axis current obtained by performing rotational coordinate transformation on the $\alpha$-axis current and the $\beta$-axis current by using an angle based on a direction of a primary magnetic flux of the rotor of the motor (60).

The direct-current signal may be electric power input to the converter (21) of the motor drive device (20), electric power output from the converter (21), electric power output from the direct-current part (22), a current flowing between the converter (21) and the direct-current part (22), a current flowing between the direct-current part (22) and the inverter (23), or the like.

[Specific Examples of Alternating-Current Signal]

Examples of the alternating-current signal include "phase currents (iu, iv, iw) of the motor (60)", "phase voltages (Vu, Vv, Vw) of the motor (60)", and "interlinkage magnetic fluxes ($\Psi$fu, $\Psi$fv, $\Psi$fw) of the phases".

The interlinkage magnetic fluxes ($\Psi$fu, $\Psi$fv, $\Psi$fw) of the phases can be expressed by the following expression.

[Math. 19]

$$\psi_{fu} = \frac{\sqrt{2}}{3}\lambda_0 \cos\theta$$

$$\psi_{fv} = \frac{\sqrt{2}}{3}\lambda_0 \cos\left(\theta - \frac{2}{3}\pi\right)$$

$$\psi_{fw} = \frac{\sqrt{2}}{3}\lambda_0 \cos\left(\theta + \frac{2}{3}\pi\right)$$

Other examples of the alternating-current signal include a current, a voltage and interlinkage magnetic flux in a fixed system of coordinates obtained by performing three-phase to two-phase transformation on the alternating-current signal.

The alternating-current signal may be a line current, a line-to-line voltage, or the like of the motor (60). The alternating-current signal may be two-phase AC currents (e.g., an $\alpha$-axis current and a $\beta$-axis current) and two-phase AC voltages obtained by performing three-phase to two-phase transformation on phase currents, phase voltages, line currents, or line-to-line voltages. The AC current may be a current flowing between a commercial power source system (specifically, an alternating-current power source (5)) and the converter (21) of the motor drive device (20).

(Specific Examples of Estimation Processing)

Next, specific examples of the estimation processing are described. Examples of the estimation processing include the following four estimation processing (first to fourth estimation processing). The following describes, as an example, a case where the estimation processing is performed on the basis of the amplitude of the specific frequency component. In the following description, the "specific frequency component" is an "amplitude value of the specific frequency component".

In the following description, a value indicative of a magnitude of a temporal change of the specific frequency component included in the physical amount that is correlated with the state of the compressor (50) is referred to as an "index value". For example, in the estimation processing, the control unit (31) derives the index value in each predetermined processing cycle and estimates whether or not the compressor (50) is in a "state in which the specific frequency component rapidly changes" in accordance with a result of comparison between the index value and a threshold value.

[First Estimation Processing]

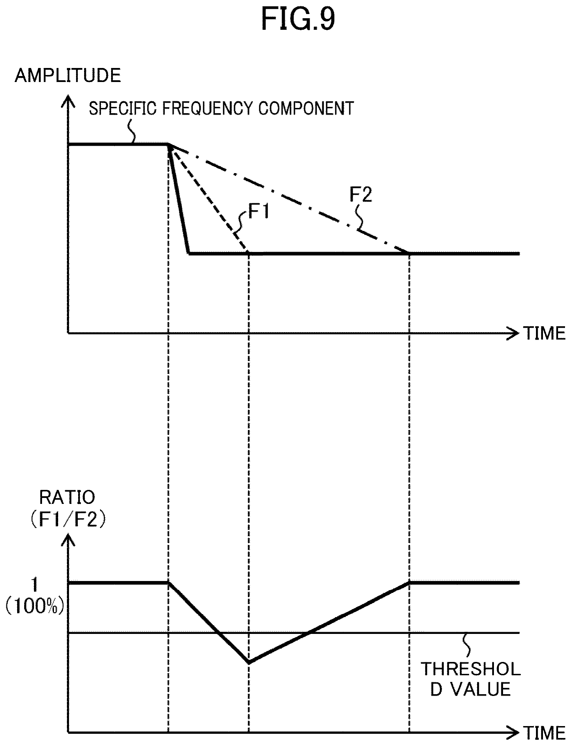

First, the first estimation processing is described with reference to Fig. 9. The index value in the first estimation processing is a ratio value obtained by dividing a "first filter value (F1) indicative of the specific frequency component processed by a first filter" by a "second filter value (F2) indicative of the specific frequency component processed by a second filter". A time constant of the second filter is larger than a time constant of the first filter.

Note that in a case where the time constant of the first filter is too large, there is a possibility that a temporal change (a temporal change in 20 to 30 seconds) of the specific frequency component that appears during occurrence of an abnormality (e.g., during occurrence of failure of the sealability of the compression chamber (68) provided by the lubricating oil) is not detected. Accordingly, for example, the time constant of the first filter may be set "less than 21.556 seconds", specifically, may be set to "3.59 seconds".

In a case where the time constant of the second filter is too small, the time constant of the second filter is close to the time constant of the first filter, and a change of the index value (the ratio value) during occurrence of an abnormality is small. Conversely, in a case where the time constant of the second filter is too large, there is a possibility that influence of temporal changes of the number of revolutions of the motor (60) of the compressor (50), pressure, and temperature becomes large. Accordingly, for example, the time constant of the second filter may be set "equal to or greater than 21.556 seconds and equal to or less than 215.56 seconds", specifically, may be set to "64.67 seconds".

In the first estimation processing, the control unit (31) determines whether or not the index value in the first estimation processing (in this example, the ratio value obtained by dividing the "first filter value (F1)" by the "second filter value (F2)") is smaller than a predetermined threshold value (in this example, a threshold value for detecting a rapid decrease of the specific frequency component). In a case where the index value is smaller than the threshold value, the control unit (31) estimates that the compressor (50) is in a "state in which the specific frequency component rapidly changes (in this example, rapidly decreases)". On the other hand, in a case where the index value is not smaller than the threshold value, the control unit (31) estimates that the compressor (50) is not in the "state in which the specific frequency component rapidly changes (in this example, rapidly decreases)".

Note that in the first estimation processing, the control unit (31) may estimate whether or not the compressor (50) is in a "state in which the specific frequency component rapidly increases". In this case, for example, the control unit (31) may estimate that the compressor (50) is in the "state in which the specific frequency component rapidly increases" in a case where the index value is larger than a predetermined threshold value (a threshold value for detecting a rapid increase of the specific frequency component).

The index value in the first estimation processing may be a difference value obtained by subtracting the "second filter value (F2)" from the "first filter value (F1)".

Alternatively, the index value in the first estimation processing may be a ratio value obtained by dividing the "second filter value (F2)" by the "first filter value (F1)". In this case, for example, the control unit (31) may estimate that the compressor (50) is in a "state in which the specific frequency component rapidly changes (specifically, rapidly decreases)" in a case where the index value in the first estimation processing is larger than a predetermined threshold value (a threshold value for detecting a rapid decrease of the specific frequency component).

Alternatively, the index value in the first estimation processing may be a difference value obtained by subtracting the "first filter value (F1)" from the "second filter value (F2)". In this case, for example, the control unit (31) may estimate that the compressor (50) is in a "state in which the specific frequency component rapidly changes (specifically, rapidly decreases)" in a case where the index value in the first estimation processing is larger than a predetermined threshold value (a threshold value for detecting a rapid decrease of the specific frequency component).

[Second Estimation Processing]

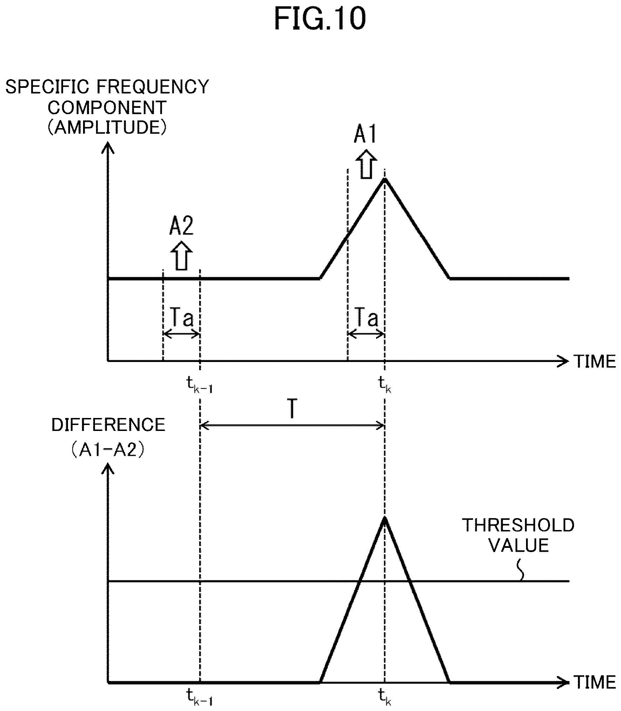

Next, the second estimation processing is described with reference to Fig. 10. The index value in the second estimation processing is a difference value obtained by subtracting a "second time average value (A2), which is an average value of the specific frequency component within a predetermined period (Ta) that ends at a second time ($t_{k-1}$) earlier than a first time ($t_k$) by a period (T)" from a "first time average value (A1), which is an average value of the specific frequency component within the predetermined period (Ta) that ends at the first time ($t_k$)".

Note that in a case where the predetermined period (Ta) is too long, there is a possibility that a temporal change (a temporal change in 20 to 30 seconds) of the specific frequency component that appears during occurrence of an abnormality (e.g., during occurrence of failure of sealability of the compression chamber (68) provided by the lubricating oil) is not detected. Accordingly, for example, the predetermined period (Ta) may be set "less than 60 seconds", specifically, may be set to "5 seconds".

In a case where the period (T) is too short, a change of the index value (the difference value) during occurrence of an abnormality is small. Conversely, in a case where the period (T) is too long, there is a possibility that influence of temporal changes of the number of revolutions of the motor (60) of the compressor (50), pressure, and temperature becomes large. Accordingly, for example, the time (T) may be set "equal to or longer than 60 seconds and equal to or shorter than 600 seconds", specifically, may be set to "60 seconds".

In the second estimation processing, the control unit (31) determines whether or not the index value in the second estimation processing (in this example, the difference value obtained by subtracting the "second time average value (A2)" from the "first time average value (A1)") is larger than a predetermined threshold value (in this example, a threshold value for detecting a rapid increase of the specific frequency component). In a case where the index value is larger than the threshold value, the control unit (31) estimates that the compressor (50) is in a "state in which the specific frequency component rapidly changes (in this example, rapidly increases)". On the other hand, in a case where the index value is not larger than the threshold value, the control unit (31) estimates that the compressor (50) is not in the "state in which the specific frequency component rapidly changes (in this example, rapidly increases)".

In the second estimation processing, the control unit (31) may estimate whether or not the compressor (50) is in a "state in which the specific frequency component rapidly decreases". In this case, for example, the control unit (31) may estimate that the compressor (50) is in the "state in which the specific frequency component rapidly decreases" in a case where the index value is smaller than a predetermined threshold value (a threshold value for detecting a rapid decrease of the specific frequency component).

The index value in the second estimation processing may be a ratio value obtained by dividing the "first time average value (A1)" by the "second time average value (A2)".

Alternatively, the index value in the second estimation processing may be a difference value obtained by subtracting the "first time average value (A1)" from the "second time average value (A2)". In this case, for example, the control unit (31) may estimate that the compressor (50) is in a "state in which the specific frequency component rapidly changes (specifically, rapidly increases)" in a case where the index value in the second estimation processing is smaller than a predetermined threshold value (a threshold value for detecting a rapid increase of the specific frequency component).

Alternatively, the index value in the second estimation processing may be a ratio obtained by dividing the "second time average value (A2)" by the "first time average value (A1)". In this case, for example, the control unit (31) may estimate that the compressor (50) is in a "state in which the specific frequency component rapidly changes (specifically, rapidly increases)" in a case where the index value in the second estimation processing is smaller than a predetermined threshold value (a threshold value for detecting a rapid increase of the specific frequency component).

[Third Estimation Processing]

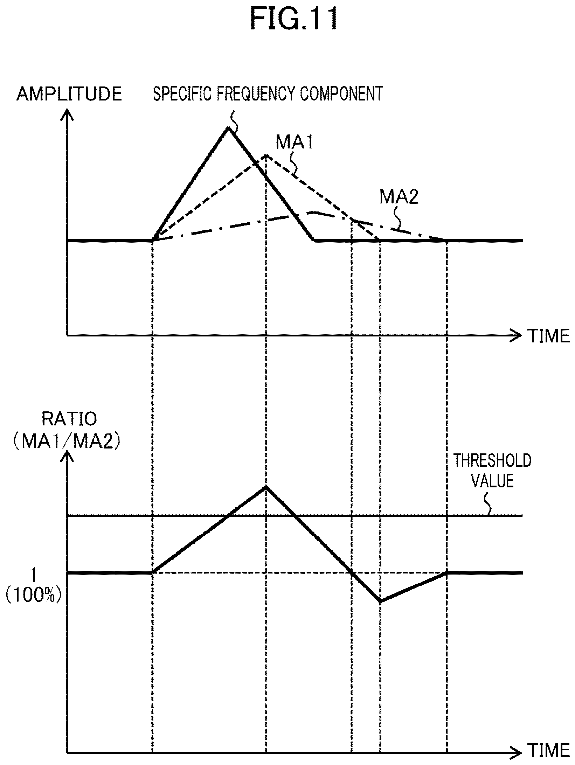

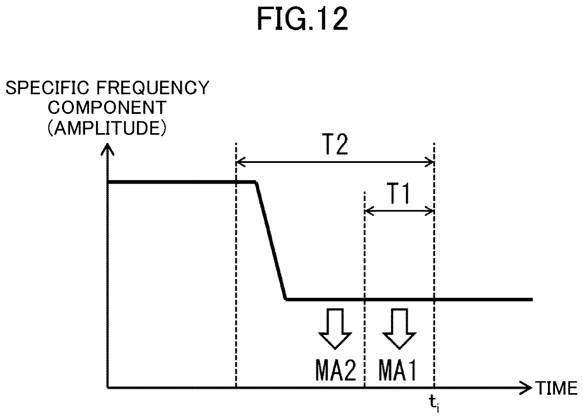

Next, the third estimation processing is described with reference to Figs. 11 and 12. The index value in the third estimation processing is a ratio value obtained by dividing a "first moving average value (MA1), which is a moving average value of the specific frequency component within a first period (T1) that ends at a predetermined time ($t_i$) (e.g., current time)" by a "second moving average value (MA2), which is a moving average value of the specific frequency component within a second period (T2) that ends at the predetermined time ($t_i$)". The second period (T2) is longer than the first period (T1).

Note that in a case where the first period (T1) is too long, there is a possibility that a temporal change (a temporal change in 20 to 30 seconds) of the specific frequency component that appears during occurrence of an abnormality (e.g., during occurrence of failure of sealability of the compression chamber (68) provided by the lubricating oil) is not detected. Accordingly, for example, the first period (T1) may be set "less than 60 seconds", specifically, may be set to "10 seconds".

In a case where the second period (T2) is too short, a change of the index value (the ratio value) during occurrence of an abnormality is small. Conversely, in a case where the second period (T2) is too long, there is a possibility that influence of temporal changes of the number of revolutions of the motor (60) of the compressor (50), pressure, and temperature becomes large. Accordingly, for example, the second period (T2) may be set "equal to or longer than 60 seconds and equal to or shorter than 600 seconds", specifically, may be set to "180 seconds".

In the third estimation processing, the control unit (31) determines whether or not the index value in the third estimation processing (in this example, the ratio value obtained by dividing the "first moving average value (MA1)" by the "second moving average value (MA2)") is larger than a predetermined threshold value (in this example, a threshold value for detecting a rapid increase of the specific frequency component). In a case where the index value is larger than the threshold value, the control unit (31) estimates that the compressor (50) is in a "state in which the specific frequency component rapidly changes (in this example, rapidly increases)". On the other hand, in a case where the index value is not larger than the threshold value, the control unit (31) estimates that the compressor (50) is not in the "state in which the specific frequency component rapidly changes (in this example, rapidly increases)".

In the third estimation processing, the control unit (31) may estimate whether or not the compressor (50) is a "state in which the specific frequency component rapidly decreases". In this case, for example, the control unit (31) may estimate that the compressor (50) is in the "state in which the specific frequency component rapidly decreases" in a case where the index value is smaller than a predetermined threshold value (a threshold value for detecting a rapid decrease of the specific frequency component).

The index value in the third estimation processing may be a difference value obtained by subtracting the "second moving average value (MA2)" from the "first moving average value (MA1)".

Alternatively, the index value in the third estimation processing may be a ratio value obtained by subtracting the "second moving average value (MA2)" by the "first moving average value (MA1)". In this case, for example, the control unit (31) may estimate that the compressor (50) is in a "state in which the specific frequency component rapidly changes (specifically, rapidly increases)" in a case where the index value in the third estimation processing is smaller than a predetermined threshold value (a threshold value for detecting a rapid increase of the specific frequency component).

Alternatively, the index value in the third estimation processing may be a difference value obtained by subtracting the "first moving average value (MA1)" from the "second moving average value (MA2)". In this case, for example, the control unit (31) may estimate that the compressor (50) is in a "state in which the specific frequency component rapidly changes (specifically, rapidly increases)" in a case where the index value in the third estimation processing is smaller than a predetermined threshold value (a threshold value for detecting a rapid increase of the specific frequency component).

[Fourth Estimation Processing]

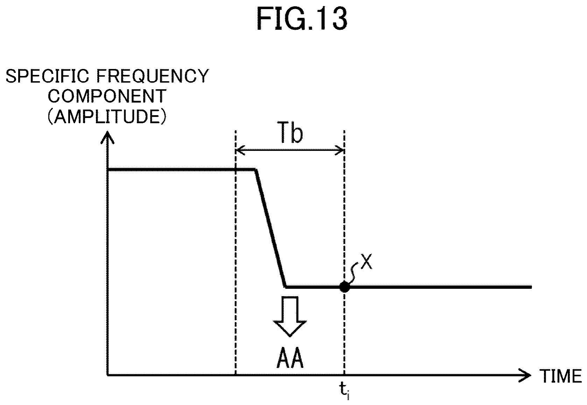

Next, the fourth estimation processing is described with reference to Fig. 13. The index value in the fourth estimation processing is a ratio value obtained by dividing an "instantaneous value (X) of the specific frequency component at a predetermined time ($t_i$) (e.g., current time)" by an "average value (AA) of the specific frequency component within a predetermined period (Tb) that ends at the predetermined time ($t_i$)".

Note that in a case where the predetermined period (Tb) is too short, a change of the index value (the difference value) during occurrence of an abnormality is small. Conversely, in a case where the predetermined period (Tb) is too long, there is a possibility that influence of temporal changes of the number of revolutions of the motor (60) of the compressor (50), pressure, and temperature becomes large. Accordingly, for example, the predetermined period (Tb) may be set "equal to or longer than 60 seconds and equal to or shorter than 600 seconds", specifically, may be set to "180 seconds".

In the fourth estimation processing, the control unit (31) determines whether or not the index value in the fourth estimation processing (in this example, the ratio value obtained by dividing the "instantaneous value (X)" by the "average value (AA)") is smaller than a predetermined threshold value (in this example, a threshold value for detecting a rapid decrease of the specific frequency component). In a case where the index value is smaller than the threshold value, the control unit (31) estimates that the compressor (50) is in a "state in which the specific frequency component rapidly changes (in this example, rapidly decreases)". On the other hand, in a case where the index value is not smaller than the threshold value, the control unit (31) estimates that the compressor (50) is not in the "state in which the specific frequency component rapidly changes (in this example, rapidly decreases)".

In the fourth estimation processing, the control unit (31) may estimate whether or not the compressor (50) is in a "state in which the specific frequency component rapidly increases". In this case, for example, the control unit (31) may estimate that the compressor (50) is the "state in which the specific frequency component rapidly increases" in a case where the index value is larger than a predetermined threshold value (a threshold value for detecting a rapid increase of the specific frequency component).

The index value in the fourth estimation processing may be a difference value obtained by subtracting the "average value (AA)" from the "instantaneous value (X)".

Alternatively, the index value in the fourth estimation processing may be a ratio value obtained by dividing the "average value (AA)" by the "instantaneous value (X)". In this case, for example, the control unit (31) may estimate that the compressor (50) is in the "state in which the specific frequency component rapidly changes (specifically, rapidly decreases)" in a case where the index value in the fourth estimation processing is larger than a predetermined threshold value (a threshold value for detecting a rapid decrease of the specific frequency component).

Alternatively, the index value in the fourth estimation processing may be a difference value obtained by subtracting the "instantaneous value (X)" from the "average value (AA)". In this case, for example, the control unit (31) may estimate that the compressor (50) is in a "state in which the specific frequency component rapidly changes (specifically, rapidly decreases)" in a case where the index value in the fourth estimation processing is larger than a predetermined threshold value (a threshold value for detecting a rapid decrease of the specific frequency component).

(Refrigeration System)

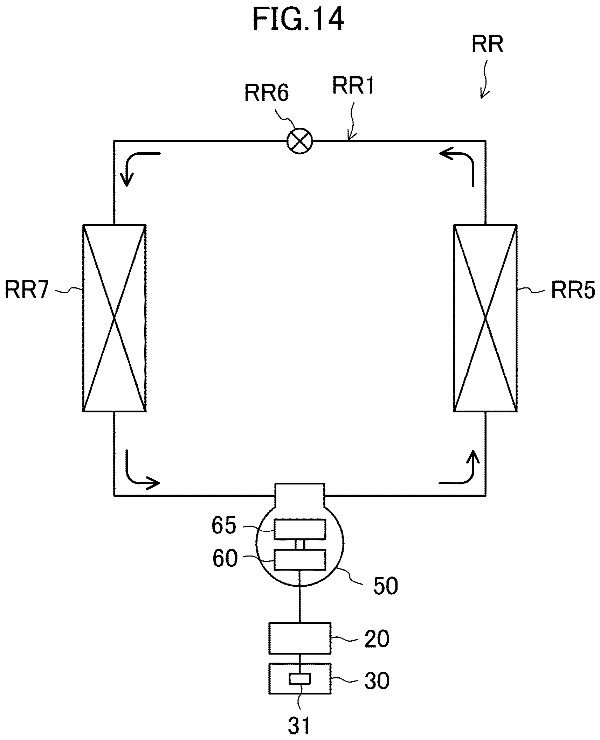

Fig. 14 illustrates a configuration of the refrigeration system (RR). The refrigeration system (RR) includes a refrigerant circuit (RR1) filled with a refrigerant, the motor drive device (20), and the control device (30).

The refrigerant circuit (RR1) includes the compressor (50), a radiator (RR5), a decompression mechanism (RR6), and an evaporator (RR7). In this example, the decompression mechanism (RR6) is an expansion valve. The refrigerant circuit (RR1) performs a vapor compression refrigeration cycle.

The compressor (50) includes the compression mechanism (65) and the motor (60). The compression mechanism (65) is coupled to the motor (60) by a drive shaft. The motor (60) drives the compression mechanism (65) to rotate by driving the drive shaft to rotate. The motor drive device (20) drives the motor (60).

In the refrigeration cycle, the refrigerant that has flowed out from the compressor (50) releases heat in the radiator (RR5). The refrigerant that has flowed out from the radiator (RR5) is decompressed in the decompression mechanism (RR6) and evaporates in the evaporator (RR7). Then, the refrigerant that has flowed out from the evaporator (RR7) flows into the compressor (50).

In this example, the refrigeration system (RR) is an air conditioner. The air conditioner may be a cooling-only air conditioner or may be a heating-only air conditioner. Alternatively, the air conditioner may be an air conditioner that switches between cooling and heating. In this case, the air conditioner includes a switching mechanism (e.g., a four-way switching valve) that switches a circulation direction of the refrigerant. The refrigeration system (RR) may be a water heater, a chiller unit, or a cooling device that cools air in a chamber. The cooling device cools air in a refrigerator, a freezer, a container, or the like.

(Findings Obtained by Experiment)

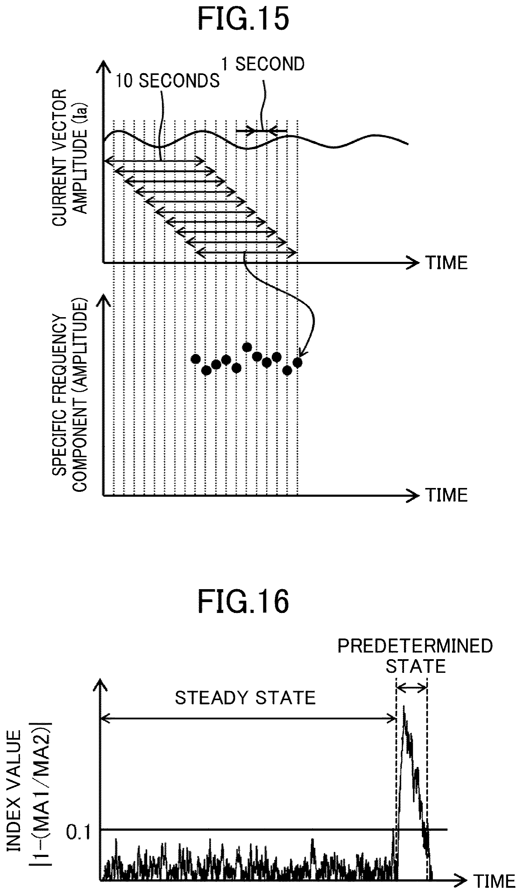

Next, an experiment conducted by the inventors of the present application and findings obtained by the experiment are described with reference to Figs. 15 and 16.

As illustrated in Fig. 15, in the experiment, the "amplitude value of the specific frequency component" included in the physical amount (in this example, the current vector amplitude (Ia)) obtained for 10 seconds was derived every second. An absolute value of a difference between a value obtained by dividing the first moving average value (MA1) by the second moving average value (MA2) and 1 was used as an "index value". The index value is expressed by an expression "$|1 - (MA1/MB2)|$". It can be said that the index value is a modification of the index value in the third estimation processing.

Note that the first moving average value (MA1) is an average of 10 amplitude values derived within the first period (T1) lasting 10 seconds that ends at the time (ti) at which the latest amplitude value was derived. The second moving average value (MA2) is an average of 180 amplitude values derived within the second period (T2) lasting 3 minutes that ends at a time (ti) at which the latest amplitude value was derived. For example, the first period (T1) and the second period (T2) can be illustrated as illustrated in Fig. 12.

In the experiment, the compressor (50) was in a predetermined "steady state". Note that the steady state of the compressor (50) is a state different from a predetermined state (state in which the specific frequency component rapidly changes) and is a state in which the compressor (50) operates under a predetermined operation condition (steady operation condition). For example, the steady state of the compressor (50) is a state that satisfies all of the following conditions.

(1) the suction port (101a) of the oil supply path (100) is immersed in the lubricating oil accumulated in the oil accumulation portion (54)
(2) a gas-form working fluid is drawn into the compressor (50)
(3) a rotation frequency of the motor (60) of the compressor (50) is in a steady state
(4) the pressure of the working fluid discharged from the compressor (50) is in a steady state
(5) the pressure of the working fluid drawn into the compressor (50) is in a steady state
(6) the temperature of the working fluid discharged from the compressor (50) is in a steady state
(7) the temperature of the working fluid drawn into the compressor (50) is in a steady state

Note that the above steady state may be decided, for example, on the basis of a purpose of use of the compressor (50).

As illustrated in Fig. 16, the index value observed in a case where the compressor (50) is in the steady state was smaller than "0.1". When the compressor (50) changed from the steady state to the predetermined state (state in which the specific frequency component rapidly changes), the index value exceeded "0.1" and increased to a maximum value (e.g., approximately 3.5). Even in a case where the compressor (50) is in the steady state, the index value fluctuates slightly. When the index value included in a measurement period lasting 10 minutes was observed, a peak (maximum value) of the slight fluctuation of the index value could be observed.

To verify influence of differences among the individual compressors (50), work of replacing the compressor (50) provided in the refrigeration system (RR) with another compressor (50) (the compressor (50) of the same model) and observing the index value was repeated. As a result, the index value observed in a case where the compressor (50) was in a steady state was smaller than "0.1" irrespective of differences among the individual compressors (50).

By the above experiment, the inventors of the present application obtained the following findings. In the following description, conditions that the amplitude value of the specific frequency component included in the physical amount obtained within a period lasting 10 seconds is derived every second, an average of 10 amplitude values derived within the first period (T1) lasting 10 seconds that ends at the time (ti) at which the latest amplitude value is derived is used as the "first moving average value (MA1)", an average of 180 amplitude values derived within the second period (T2) lasting 3 minutes that ends at the time (ti) at which the latest amplitude value is derived is used as the "second moving average value (MA2)", and an absolute value of a difference between a value obtained by dividing the first moving average value (MA1) by the second moving average value (MA2) and 1 is used as the "index value" are referred to as "verification conditions".

The inventors of the present application found that when a threshold value for the index value is set to a "value equal to or greater than 1.1 times the maximum value of the index value obtained during the measurement period lasting 10 minutes under the condition that the compressor (50) is in the predetermined steady state" or "0.1" under the verification conditions, it can be estimated that the compressor (50) is in the predetermined state (state in which the specific frequency component rapidly changes) in a case where the index value is larger than the threshold value.

Note that by setting threshold values for the index values in the first to fourth estimation processing as follows, the handling processing can be performed at a similar timing to the handling processing performed in a case where the threshold value for the index value (the absolute value of a difference between a value obtained by dividing the first moving average value (MA1) by the second moving average value (MA2) and 1) is set to "0.1". In the following description, the index value that is the "absolute value of a difference between a value obtained by dividing the first moving average value (MA1) by the second moving average value (MA2) and 1" is referred to as a "reference index value".

[Threshold Value for Index Value in First Estimation Processing]

In a case where the index value is a "ratio value obtained by dividing the first filter value (F1) by the second filter value (F2)", the threshold value is set to a "range from 0.89 to 1.11". When the index value is deviated from this range, the reference index value exceeds "0.1".

In a case where the index value is an "absolute value of a difference between a ratio value obtained by dividing the first filter value (F1) by the second filter value (F2) and 1", the threshold value is set to "0.11". In a case where the index value exceeds this threshold value, the reference index value exceeds "0.1".

[Threshold Value for Index Value in Second Estimation Processing]

In a case where the index value is a "difference value obtained by subtracting the second time average value (A2) from the first time average value (A1)", the threshold value is set to a "range from -0.25 to +0.25". When the index value is deviated from this above range, the reference index value exceeds "0.1".

[Threshold Value for Index Value in Third Estimation Processing]

In a case where the index value is a "ratio value obtained by dividing the first moving average value (MA1) by the second moving average value (MA2)", the threshold value is set to a "range from 0.9 to 1.1". When the index value is deviated from this range, the reference index value exceeds "0.1".

[Threshold Value for Index Value in Fourth Estimation Processing]

In a case where the index value is a "ratio value obtained by dividing the instantaneous value (X) of the specific frequency component by the average value (AA) of the specific frequency component within the predetermined period (Tb)", the threshold value is set to a "range from 0.69 to 1.31". When the index value is deviated from this range, the reference index value exceeds "0.1".

In a case where the index value is an "absolute value of a difference between a ratio value obtained by dividing the instantaneous value (X) of the specific frequency component by the average value (AA) of the specific frequency component within the predetermined period (Tb) and 1", the threshold value is set to "0.31". When the index value exceeds this threshold value, the reference index value exceeds "0.1".

(Other Embodiments)

Although a signal indicative of a physical amount correlated with a voltage or current of the motor (60) is illustrated as an example of the physical amount correlated with the state of the motor (60) in the above description, this is not restrictive. For example, the physical amount may be a signal indicative of vibration of the motor (60) or may be a signal indicative of sound of the motor (60). The signal indicative of the vibration of the motor (60) may be acquired by a vibration sensor (not illustrated) provided in the compressor (50) or the apparatus (1). The signal indicative of the sound of the motor (60) may be acquired by a microphone (not illustrated) provided in the compressor (50) or the apparatus (1). The sound may be sound within an audible range or may be sound (ultrasound) outside the audible range. That is, the physical amount may be any of a rotation frequency of the motor (60), a voltage applied to the motor (60), a current flowing through the motor (60), vibration of the compressor (50), sound of the compressor (50), and ambient sound around the compressor (50).

In the above description, the control unit (31) may be configured to perform the estimation processing by using an algorithm (an algorithm for estimating a state on the basis of a change of a signal) constructed by using a neural network or machine learning.

In the above description, the control unit (31) may be realized by a single processor or may be realized by a plurality of processors. The control unit (31) may be realized by a plurality of arithmetic processing units (computers) that communicate with each other over a communication network.

Although a case where the compressor (50) is a "scroll compressor" has been described as an example in the above description, this is not restrictive. For example, the compressor (50) may be a swing compressor in which a piston and a blade are integral, may be a rotary compressor in which a piston and a blade are separate, or may be another type of rotary compressor.

The compressor (50) may be a two-cylinder compressor (a swing compressor or a rotary compressor) having two compression chambers.

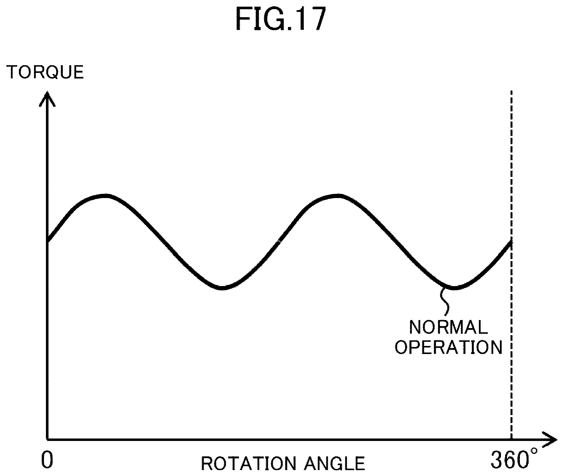

As illustrated in Fig. 17, a pulsation period (a pulsation period during a normal operation) of torque of the two-cylinder compressor corresponds to 1/2 of a rotation period of the motor (60). When liquid compression occurs in the two-cylinder compressor, a rapid change of the torque of the compressor appears with a period corresponding to 1/2 of the rotation period of the motor (60). Accordingly, when liquid compression occurs in the two-cylinder compressor, a secondary component of the torque of the compressor (50) rapidly changes (specifically, rapidly increases), and as a result, a secondary component of the current vector amplitude (Ia) rapidly changes (specifically, rapidly increases). Note that the "secondary component" refers to a frequency component having a frequency two times the mechanical angular frequency of the motor (60).

In a case where the compressor (50) is a "two-cylinder compressor", the "specific frequency component processed in the estimation processing" may be a "secondary component". This makes it possible to estimate whether or not the compressor (50) is in a "liquid compression state".

In the above description, the various sensors may be contact sensors or may be non-contact sensors. The contact sensors may be attached to the casing (51) of the compressor (50) or may be attached to a pipe or an electric wire provided close to the compressor (50). The non-contact sensors may be attached to a place in the vicinity of the casing (51) of the compressor (50), a place in the vicinity of a pipe or an electric wire provided close to the compressor (50), a place in the vicinity of the apparatus (1) in which the compressor (50) is mounted, or the like.

In the above description, the detection unit that detects information for obtaining the physical amount correlated with the state of the compressor (50) may be a single sensor or may be a combination of a plurality of sensors.

In the above description, the changing processing may be "changing processing for changing an operating condition of the system including the compressor (50)". In the changing processing, not only the operating condition of the motor (60), but also an operating condition of "other constituent elements excluding the motor (60)" included in the system including the compressor (50) may be changed. Examples of the changing processing include processing for stopping the motor (60), processing for accelerating the motor (60), processing for decelerating the motor (60), processing for decreasing the current flowing through the motor (60), processing for increasing the current flowing through the motor (60), processing for increasing an opening degree of an expansion valve (electric valve) that constitutes the decompression mechanism (RR6), processing for decreasing the opening degree of the expansion valve (electric valve) that constitutes the decompression mechanism (RR6), processing for increasing the pressure of the working fluid discharged from the compressor (50), processing for lowering the pressure of the working fluid discharged from the compressor (50), processing for increasing the temperature of the working fluid discharged from the compressor (50), processing for lowering the temperature of the working fluid discharged from the compressor (50), processing for returning the lubricating oil flowing through a fluid flow passage together with the working fluid to the compressor (50), processing for increasing the number of revolutions of a fan (not illustrated) that transports air to the radiator (RR5) or the evaporator (RR7), and processing for reducing the number of revolutions of the fan that transports air to the radiator (RR5) or the evaporator (RR7).

Although the embodiment and modifications have been described above, it will be understood that various changes of forms and details can be made without departing from the spirit and scope of the claims. Furthermore, elements in the above embodiment, modifications, and other embodiments may be combined or replaced as appropriate.

(Summary of Embodiment)

In summary, the embodiment relates to a control device that controls a system including the compressor (50) including the motor (60) and the compression mechanism (65). This control device includes the control unit (31). The control unit (31) performs handling processing including at least one of output processing for outputting information indicating that the compressor (50) is in a predetermined state and changing processing for changing an operating condition of the system in a case where an index value indicative of a magnitude of a temporal change of a specific frequency component included in a physical amount correlated with a state of the compressor (50) and a predetermined threshold value satisfy a predetermined relationship.

As a result of diligent studies, the inventors of the present application found that the states of the compressor (50) including the motor (60) and the compression mechanism (65) include a "state in which the specific frequency component included in the physical amount correlated with the state of the compressor (50) rapidly changes". Furthermore, the inventors of the present application found that such a state (the state of the compressor (50) in which the specific frequency component rapidly changes) can be estimated on the basis of the magnitude of the temporal change of the specific frequency component included in the physical amount.

According to the above configuration, it is possible to appropriately perform processing for handling a case where the compressor (50) is in the predetermined state (the state in which the specific frequency component rapidly changes) by performing the handling processing in a case where the index value indicative of the magnitude of the temporal change of the specific frequency component included in the physical amount correlated with the state of the compressor (50) and the predetermined threshold value satisfy the predetermined relationship.

Note that the control unit (31) may be configured to perform the handling processing in a case where the index value is larger than the threshold value under conditions that an amplitude value of the specific frequency component included in the physical amount obtained during 10 seconds is derived every second, the index value is an "absolute value of a difference between a value obtained by dividing the first moving average value (MA1) by the second moving average value (MA2) and 1", the first moving average value (MA1) is an "average value of 10 amplitude values derived within the first period (T1) lasting 10 seconds that ends at a time (ti) at which a latest amplitude value is derived", the second moving average value (MA2) is an "average value of 180 amplitude values derived within the second period (T2) lasting 3 minutes that ends at a time (ti) at which a latest amplitude value is derived", and the threshold value is set to a "value equal to or greater than 1.1 times a maximum value of the index value obtained during a measurement period lasting 10 minutes under a condition that the compressor (50) is in a predetermined steady state".

As a result of diligent studies, the inventors of the present application found that it is possible to estimate that the compressor (50) is in the predetermined state (the state in which the specific frequency component rapidly changes) in a case where the index value is larger than the threshold value by setting the threshold value for the index value to a "value equal to or greater than 1.1 times the maximum value of the index value obtained during the measurement period lasting 10 minutes under the condition that the compressor (50) is in a predetermined steady state".

According to the above configuration, processing for handling a case where the compressor (50) is in the predetermined state (the state in which the specific frequency component rapidly changes) can be appropriately performed by performing the handling processing in a case where the index value is larger than the threshold value.

The control unit (31) may be configured to perform the handling processing in a case where the index value is larger than the threshold value under conditions that an amplitude value of the specific frequency component included in the physical amount obtained during 10 seconds is derived every second, the index value is an "absolute value of a difference between a value obtained by dividing the first moving average value (MA1) by the second moving average value (MA2) and 1", the first moving average value (MA1) is an "average value of 10 amplitude values derived within the first period (T1) lasting 10 seconds that ends at a time (ti) at which a latest amplitude value is derived", the second moving average value (MA2) is an "average value of 180 amplitude values derived within the second period (T2) lasting 3 minutes that ends at a time (ti) at which a latest amplitude value is derived", and the threshold value is set to 0.1.

As a result of diligent studies, the inventors of the present application found that it is possible to estimate that the compressor (50) is in the predetermined state (the state in which the specific frequency component rapidly changes) in a case where the index value is larger than the threshold value by setting the threshold value for the index value to "0.1".

According to the above configuration, processing for handling a case where the compressor (50) is in the predetermined state (the state in which the specific frequency component rapidly changes) can be appropriately performed by performing the handling processing in a case where the index value is larger than the threshold value.

The compression mechanism (65) may include the compression chamber (68) for compressing a working fluid. The compression chamber (68) may be sealed by a lubricating oil. The predetermined state may be a state in which sealability of the compression chamber (68) provided by the lubricating oil has failed.

As a result of diligent studies, the inventors of the present application found a phenomenon "when the sealability of the compression chamber (68) provided by the lubricating oil fails in the compressor (50), the specific frequency component included in the physical amount correlated with the state of the compressor (50) rapidly changes".

According to the above configuration, processing for handling a case where the compressor (50) is in the "state in which the sealability of the compression chamber (68) provided by the lubricating oil has failed" can be appropriately performed.

The compression mechanism (65) may include the compression chamber (68) for compressing a working fluid. The compressor (50) may include the oil accumulation portion (54) in which a lubricating oil is accumulated and the oil supply path (100) for supplying the lubricating oil accumulated in the oil accumulation portion (54) to the compression chamber (68). The oil supply path (100) may have the suction port (101a), and in a case where the suction port (101a) is immersed in the lubricating oil accumulated in the oil accumulation portion (54), the lubricating oil drawn in through the suction port (101a) may be enabled to be supplied to the compression chamber (68). The compression chamber (68) may be sealed by the lubricating oil. The predetermined state may be a state in which the suction port (101a) of the oil supply path (100) is not immersed in the lubricating oil accumulated in the oil accumulation portion (54).

As a result of diligent studies, the inventors of the present application found a phenomenon "when the suction port (101a) of the oil supply path (100) is no longer immersed in the lubricating oil accumulated in the oil accumulation portion (54) in the compressor (50), the sealability of the compression chamber (68) provided by the lubricating oil fails, and as a result, the specific frequency component included in the physical amount correlated with the state of the compressor (50) rapidly changes".

According to the above configuration, processing for handling a case where the compressor (50) is in the "state in which the suction port (101a) of the oil supply path (100) is not immersed in the lubricating oil accumulated in the oil accumulation portion (54)" can be appropriately performed.

The predetermined state may be a liquid compression state in which a liquid-form working fluid is drawn into the compression mechanism (65) and is compressed in the compression mechanism (65).

As a result of diligent studies, the inventors of the present application found a phenomenon "when a liquid-form working fluid is drawn into the compression mechanism (65) and is compressed in the compression mechanism (65) in the compressor (50), the specific frequency component included in the physical amount correlated with the state of the compressor (50) rapidly changes".

According to the above configuration, processing for handling a case where the compressor (50) is in a "liquid compression state in which a liquid-form working fluid is drawn into the compression mechanism (65) and is compressed in the compression mechanism (65)" can be appropriately performed.

Furthermore, the embodiment relates to a control method for controlling a system including the compressor (50) including the motor (60) and the compression mechanism (65). This control method includes an acquisition step and a handling step. In the acquisition step, a physical amount correlated with a state of the compressor (50) is acquired. In the handling step, at least one of the output step of outputting information indicating that the compressor (50) is in a predetermined state and the changing step of changing an operating condition of the system is performed in a case where an index value indicative of a magnitude of a temporal change of a specific frequency component included in the physical amount acquired in the acquisition step and a predetermined threshold value satisfy a predetermined relationship.

According to the above method, processing for handling a case where the compressor (50) is in a predetermined state (a state in which the specific frequency component rapidly changes) can be appropriately performed by performing the handling step in a case where the index value indicative of the magnitude of the temporal change of the specific frequency component included in the physical amount correlated with the state of the compressor (50) and the predetermined threshold value satisfy the predetermined relationship.

Industrial Applicability

As described above, the present disclosure is useful as a control technique.

Reference Signs List

| 1 | apparatus |
| --- | --- |
| 5 | power source |
| 10 | drive system |
| 20 | motor drive device |
| 21 | converter |
| 22 | direct-current part |
| 23 | inverter (conversion unit) |
| 30 | control device (state estimation device) |
| 31 | control unit |
| 41 | phase current detection unit |
| 42 | electrical angular frequency detection unit |
| 50 | compressor |
| 54 | oil accumulation portion |
| 60 | motor |
| 65 | compression mechanism |
| 68 | compression chamber |
| 100 | oil supply path |
| 101a | intake port |
| RR | refrigeration system |
| RR1 | refrigerant circuit |

**Claims**

1. A control device for controlling a system including a compressor (50) including a motor (60) and a compression mechanism (65), the control device comprising:
a control unit (31) configured to perform handling processing including at least one of output processing for outputting information indicating that the compressor (50) is in a predetermined state and changing processing for changing an operating condition of the system in a case where an index value indicative of a magnitude of a temporal change of a specific frequency component included in a physical amount correlated with a state of the compressor (50) and a predetermined threshold value satisfy a predetermined relationship.

2. The control device according to claim 1, wherein
the control unit (31) is configured to perform the handling processing in a case where the index value is larger than the threshold value under conditions that an amplitude value of the specific frequency component included in the physical amount obtained during 10 seconds is derived every second, the index value is an absolute value of a difference between a value obtained by dividing a first moving average value (MA1) by a second moving average value (MA2) and 1, the first moving average value (MA1) is an average value of 10 amplitude values derived within a first period (T1) lasting 10 seconds that ends at a time (ti) at which a latest amplitude value is derived, the second moving average value (MA2) is an average value of 180 amplitude values derived within a second period (T2) lasting 3 minutes that ends at a time (ti) at which a latest amplitude value is derived, and the threshold value is set to a value equal to or greater than 1.1 times a maximum value of the index value obtained during a measurement period lasting 10 minutes under a condition that the compressor (50) is in a predetermined steady state.

3. The control device according to claim 1, wherein
the control unit (31) is configured to perform the handling processing in a case where the index value is larger than the threshold value under conditions that an amplitude value of the specific frequency component included in the physical amount obtained during 10 seconds is derived every second, the index value is an absolute value of a difference between a value obtained by dividing a first moving average value (MA1) by a second moving average value (MA2) and 1, the first moving average value (MA1) is an average value of 10 amplitude values derived within a first period (T1) lasting 10 seconds that ends at a time (ti) at which a latest amplitude value is derived, the second moving average value (MA2) is an average value of 180 amplitude values derived within a second period (T2) lasting 3 minutes that ends at a time (ti) at which a latest amplitude value is derived, and the threshold value is set to 0.1.

4. The control device according to any one of claims 1 to 3, wherein

the compression mechanism (65) includes a compression chamber (68) for compressing a working fluid,
the compression chamber (68) is sealed by a lubricating oil, and
the predetermined state is a state in which sealability of the compression chamber (68) provided by the lubricating oil has failed.

5. The control device according to any one of claims 1 to 3, wherein

the compression mechanism (65) includes a compression chamber (68) for compressing a working fluid, the compressor (50) includes an oil accumulation portion (54) in which a lubricating oil is accumulated and an oil supply path (100) for supplying the lubricating oil accumulated in the oil accumulation portion (54) to the compression chamber (68),
the oil supply path (100) has a suction port (101a), and in a case where the suction port (101a) is immersed in the lubricating oil accumulated in the oil accumulation portion (54), the lubricating oil drawn in through the suction port (101a) is enabled to be supplied to the compression chamber (68),
the compression chamber (68) is sealed by the lubricating oil, and
the predetermined state is a state in which the suction port (101a) of the oil supply path (100) is not immersed in the lubricating oil accumulated in the oil accumulation portion (54).

6. The control device according to any one of claims 1 to 3, wherein
the predetermined state is a liquid compression state in which a liquid-form working fluid is drawn into the compression mechanism (65) and is compressed in the compression mechanism (65).

7. The control device according to any one of claims 1 to 6, wherein
the physical amount is any of a rotation frequency of the motor (60), a voltage applied to the motor (60), a current flowing through the motor (60), vibration of the compressor (50), a sound of the compressor (50), and ambient sound around the compressor (50).

8. The control device according to any one of claims 1 to 7, wherein
a frequency of the specific frequency component is a frequency that is in synchronization with a rotation frequency of the motor (60).

9. A refrigeration system comprising:

a refrigerant circuit (RR1) including a compressor (50) including a motor (60) and a compression mechanism (65); and
a control device (30), wherein
the control device (30) is the control device according to any one of claims 1 to 8.

10. A control method for controlling a system including a compressor (50) including a motor (60) and a compression mechanism (65), the control method comprising:

an acquisition step of acquiring a physical amount correlated with a state of the compressor (50); and
a handling step including at least one of an output step of outputting information indicating that the compressor (50) is in a predetermined state and a changing step of changing an operating condition of the system in a case where an index value indicative of a magnitude of a temporal change of a specific frequency component included in the physical amount acquired in the acquisition step and a predetermined threshold value satisfy a predetermined relationship.

11. A control program for causing a computer to perform the control method according to claim 10.

# FIG.1

EP 4 693 886 A1

# FIG.2

# FIG.3

# FIG.4

# FIG.5

PERCENTAGE

NORMAL
OIL LEVEL ←→ ABNORMAL
OIL LEVEL

100%

TB

TA

→ TIME

# FIG.6

SPECIFIC FREQUENCY
COMPONENT (AMPLITUDE)

t1

TIME

# FIG.7

PERCENTAGE

NORMAL | LIQUID COMPRESSION | NORMAL

100%

0

TD     TC

TIME

# FIG.8

START

ACQUIRE PHYSICAL AMOUNT CORRELATED WITH STATE OF COMPRESSOR    S1

ESTIMATE STATE OF COMPRESSOR ON BASIS OF MAGNITUDE OF TEMPORAL CHANGE OF SPECIFIC FREQUENCY COMPONENT    S2

END

# FIG.9

# FIG.10

SPECIFIC FREQUENCY
COMPONENT
(AMPLITUDE)

A1

A2

Ta

Ta

TIME

$t_{k-1}$    $t_k$

T

DIFFERENCE
(A1−A2)

THRESHOLD
VALUE

TIME

$t_{k-1}$    $t_k$

# FIG.11

AMPLITUDE    SPECIFIC FREQUENCY COMPONENT

MA1

MA2

TIME

RATIO
(MA1/MA2)

THRESHOLD
VALUE

1
(100%)

TIME

# FIG.12

# FIG.13

SPECIFIC FREQUENCY
COMPONENT
(AMPLITUDE)

Tb

X

AA

TIME

$t_i$

# FIG.14

# FIG.15

# FIG.16

# FIG.17

TORQUE

0        ROTATION ANGLE        360°

NORMAL
OPERATION

## INTERNATIONAL SEARCH REPORT

| International application No. |
|---|
| **PCT/JP2024/013351** |

### A. CLASSIFICATION OF SUBJECT MATTER

*H02P 23/14*(2006.01)i; *F04B 49/02*(2006.01)i; *F04B 49/06*(2006.01)i; *F04B 49/10*(2006.01)i; *F04B 51/00*(2006.01)i
FI: H02P23/14; F04B49/02 331A; F04B49/06 341G; F04B49/10 331A; F04B49/10 331J; F04B49/10 331Z; F04B51/00

According to International Patent Classification (IPC) or to both national classification and IPC

### B. FIELDS SEARCHED

Minimum documentation searched (classification system followed by classification symbols)

H02P23/14; F04B49/02; F04B49/06; F04B49/10; F04B51/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-218928 A (DAIKIN INDUSTRIES, LTD.) 26 December 2019 (2019-12-26) paragraphs [0025]-[0076], fig. 1-3 | 1-11 |
| Y | JP 2022-28644 A (DAIKIN INDUSTRIES, LTD.) 16 February 2022 (2022-02-16) paragraphs [0040]-[0053], [0112]-[0132], fig. 1, 4 | 1-11 |
| Y | WO 2012/147192 A1 (MITSUBISHI ELECTRIC CORPORATION) 01 November 2012 (2012-11-01) paragraph [0061] | 2-9 |
| Y | JP 3-175184 A (MITSUBISHI ELECTRIC CORPORATION) 30 July 1991 (1991-07-30) p. 2, upper left column, line 15 to lower right column, line 4 | 5, 7-9 |
| Y | JP 11-280668 A (DAIKIN INDUSTRIES, LTD.) 15 October 1999 (1999-10-15) paragraph [0023] | 5, 7-9 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/013351**

| Patent document cited in search report | | | Publication date (day/month/year) | Patent family member(s) | | | Publication date (day/month/year) |
|---|---|---|---|---|---|---|---|
| JP | 2019-218928 | A | 26 December 2019 | US | 2021/0108836 | A1 | |
| | | | | paragraphs [0012]-[0063], fig. 1-3 | | | |
| | | | | EP | 3789614 | A1 | |
| JP | 2022-28644 | A | 16 February 2022 | US | 2023/0280238 | A1 | |
| | | | | paragraphs [0120]-[0133], [0182]-[0202], fig. 1, 4 | | | |
| | | | | EP | 4191222 | A1 | |
| WO | 2012/147192 | A1 | 01 November 2012 | US | 2013/0269370 | A1 | |
| | | | | paragraph [0171] | | | |
| | | | | EP | 2703748 | A1 | |
| JP | 3-175184 | A | 30 July 1991 | (Family: none) | | | |
| JP | 11-280668 | A | 15 October 1999 | (Family: none) | | | |

Form PCT/ISA/210 (patent family annex) (July 2022)

**EP 4 693 886 A1**